# EUROPEAN PATENT APPLICATION

(11) **EP 1 008 929 A1**
(43) Date of publication of application: **14.06.2000**
(21) Application number: 97950414.9
(22) Date of filing: 25.12.1997
(51) Int. Cl.: G06F 9/44

(54) **MOVING OBJECT, MOVING OBJECT CONTROL METHOD, METHOD OF AND APPARATUS FOR GENERATING MOVING OBJECTS, AND STORAGE MEDIUM FOR PROGRAM FOR GENERATING MOVING OBJECTS**

(30) Priority: 10.04.1997 JP 9209197
(71) Applicant: INTERNATIONAL BUSINESS MACHINES CORPORATION, Armonk, NY 10504 (US)
(72) Inventor: MINAMI, Kazuhiro, IBM Japan Ltd, Yamato-shi, Kanagawa-ken 242 (JP); SUZUKI, Toshihiro, IBM Japan Ltd, Yamato-shi, Kanagawa-ken 242 (JP)
(74) Representative: Jennings, Michael John
(86) International application number: JP9704864
(87) International publication number: WO9845776

(57) **Abstract**

Provided is an efficient mobile agent that requires only a short processing time and that can reduce to the minimum the employment of other resources.

According to the present invention, a template is provided by which complicated activities performed by a mobile agent are sorted into basic activity patterns. The template is linked to the execution of an activity that occurs at a place before any movement is initiated and to the execution of an activity that occurs after a movement causes. In accordance with its type, the template defines an instruction to be executed before and after a movement, and transmits it to the mobile agent. In response to the instruction, the mobile agent prepares a clone, moves to another place, or fuses clones. In addition, a plan object held in the mobile agent specifies the sequential order for the execution of templates and activities.

## Description

### Field of the Invention

The present invention relates to a data processing method for a computer network, and more specifically to a mobile agent technique whereby a mobile agent is moved to a remote server that exists on a network in a distributed computer environment to prepare an instruction at the remote server.

### Description of the Background

Conventionally, there is a mobile agent technique whereby a mobile agent is moved to a server on a network in a distributed computer environment to prepare an instruction (Japanese Unexamined Patent Publication No. Hei 7-182174 (USP 5,603,031), "Latest Internet Technology," Fumihiko Nishida, Susumu Fujiwara, et. al., Nikkei Communication Extra Issue, Nikkei BP Co., Ltd., pp. 104 to 117).

Such a mobile agent is constituted by two essential components, a "mobile agent" and a "place." The mobile agent can move between places that exist on a network, while the internal state of the mobile agent is maintained. At a place, the mobile agent can contact another agent (another mobile agent or a non-mobile agent), and can receive necessary services. The place is provided by a server that exists on a network and that serves as a location to which the agent moves. The place supports contacts between agents, and eliminates differences in hardware and in platforms.

The mobile agent technique enables the mobile agent to execute man labor jobs, such as the dynamic adjustment of the settings for in-house meetings in accordance with attenders' schedules and the employment conditions for meeting rooms, and the acquisition of desired information that is distributed on the network.

Suppose a conventional mobile agent searches for open periods in the schedules of a plurality of attenders and makes a reservation for a meeting room. The mobile agent travels sequentially from place to place where information concerning the schedules of the attenders exists and where information concerning the booking of meeting rooms exists; searches for attenders' open periods and for unoccupied time periods for a meeting room; temporarily reserves the open periods of the attenders and the unoccupied meeting room time periods; and finally searches for a time period that is acceptable for all the attenders. If such a period is found, the temporary reservation must be reported to the attenders as a scheduled reservation and a meeting room must be reserved.

However, when the number of attenders or the number of available meeting rooms is large, a time lag occurs between the making of the temporary reservation and the scheduled reservation. As a result, an agent for making a reservation for another in-house meeting must wait, or the time zone within which available periods may be found will be shortened. In such a case, if a plurality of agents perform processing in parallel, the processing time can be reduced, and the time that the mobile agent locks in for temporary reservations can also be shortened. Further, when a process must be performed in parallel because it is complicated, it is necessary for a client site to transmit a plurality of mobile objects to sequentially execute the processing, for the results that are obtained to be re-transmitted to the client site, and for a desired process to be manually performed using the results.

Although there is a demand for mobile agents that can perform parallel processing, a conventional Java base mobile agent ("Java" is a trademark of Sunmicro Systems, Inc) can not be split during processing to perform the processing in parallel because this mobile agent does not support a function for moving around a network while maintaining a processing state. Although a Telescript mobile agent ("Telescript" is a trademark of General Magic Inc.) can move around a network while maintaining a proceeding state, it does not support a function for moving while maintaining management information, such as the turns of activities for the execution. As a result, the mobile agent can not be split for parallel processing.

Even for a mobile agent that does not perform parallel processing and that performs normal serial processing, its preparation and employment requires a program for defining the destination and the behavior of the agent. Therefore, high level programming knowledge is required of programmers, and the development of a program involves the investment of a great deal of time and effort.

### Objectives

It is one object of the present invention to provide a mobile agent that can reduce to the minimum the employment of other resources during execution.

It is another object of the present invention to provide a mobile agent that can perform processing efficiently.

It is an additional object of the present invention to reduce the processing time required for results to be returned after a mobile agent is emitted.

It is a further object of the present invention to enable the development of a mobile agent without requiring a high level of programming knowledge.

It is still another object of the present invention to reduce to the extent possible the effort and the time required to develop a mobile agent.

It is a still further object of the present invention to provide a user-friendly mobile agent development program the functioning of which a developer can understand intuitively.

### Summary of the Present Invention

According to the present invention, provided is a template (moderator template) with which complicated activities for a mobile agent are sorted into basic activity patterns, and with which a desired activity pattern for a mobile agent can be defined using a combination of these basic patterns. The template manages activities for issuing requests at places where a mobile agent travels, as a predecessor (an activity for executing a job at a preceding place) and as a successor (an activity for executing a job at the next place).

A plurality of types of templates, such as Chain, ANDSplit and ANDJoin, are prepared in accordance with the movement forms for a mobile agent. In accordance with the template types, an instruction is transmitted to the mobile agent at the former place (origin) and at the next place (destination). In response to the instruction, the mobile agent prepares a clone, moves to another place, or fuses clones.

According to one aspect of the present invention, provided is an object, the object being a member of a mobile object group, the group being operable to move from a first place to a second place under the control of a moderator agent and to execute a first activity at the first place and a second activity at the second place, the object comprises: (a) a predecessor list having link information relative to the first activity; (b) a successor list having link information relative to the second activity; and (c) a moderation module for requiring the moderator agent to move from the first place to the second place. The object according to this aspect corresponds to a moderator template in the preferred embodiment of the present invention.

According to another aspect of the present invention, provided is an object, the object being a member of a mobile object group, the group being operable to move from a first place to a second place under the control of a moderator agent and to execute a first activity at the first place and a second activity at the second place, the object comprises: (a) a predecessor list having link information relative to the first activity; (b) a successor list having link information relative to the second activity; (c) a state manager for determining whether the moderation module exists at the first place or at the second place; and (d) a moderation module for requiring the moderator agent to move from the first place to the second place. The object according to this aspect corresponds to a moderator template in the preferred embodiment of the present invention.

According to an additional aspect of the present invention, provided is a mobile object group, the group being operable to move from a first place to a second place under the control of a moderator agent and to execute a first activity at the first place and a second activity at the second place, the object comprises: (a) a moderator template including (a-1) a predecessor list having link information relative to the first activity, (a-2) a successor list having link information relative to the second activity, (a-3) a state manager for determining whether the moderation module exists in the first place or in the second place, and (a-4) a moderation module for requiring the moderator agent to move the mobile object group from the first place to the second place; (b) a plan iterator for determining for which of the first activity, the second activity and the moderator template authority for execution currently exists; and (c) a plan object for managing turns of the first activity, the second activity and the moderator template for the execution.

According to a further aspect of the present invention, provided is a method for controlling a mobile object group, the group being operable to move to a first place specified by a first address and to a second place specified by a second address under the control of a moderator agent, and to execute a first activity at the first place and a second activity at the second place, the method comprising the steps of: (a) requesting the moderator agent to prepare a first mobile moderator agent having link information relative to the first activity and a second mobile moderator agent having link information relative to the second activity; (b) obtaining the first address; (c) obtaining the second address; (d) requesting that the first mobile moderator agent move to the first place; and (e) requesting that the second mobile moderator agent move to the second place.

In claims of the specification of the invention, the request for the preparation of the first mobile moderator agent and the second mobile moderator agent includes not only the preparation of two clones that correspond to the first and to the second moderator agents, but also the idea that one of the clones that corresponds either to the first or to the second moderator agent will move to the first address or to the second address, and a mobile moderator agent currently being processed will move to the second address or to the first address.

According to still another aspect of the present invention, provided is a method for controlling a mobile object group, the group being operable to move to a first place specified by a first address, to a second place specified by a second address and to a third place specified by a third address under the control of a moderator agent, and to execute a first activity at the first place, a second activity at the second place and a third activity at the third place, the method comprises the steps of: (a) requesting that the mobile moderator agent at the first place prepare a first mobile moderator agent having link information relative to the second activity and a second mobile moderator agent having link information relative to the third activity; (b) obtaining the second address; (c) obtaining the third address; (d) requesting that the first mobile moderator agent move from the first place to the second place; (e) requesting that the second mobile moderator agent move from the first place to the third place; (f) requesting execution of the second activity at the second place; and (g) requesting execution of the third activity at the third place.

According to a still further aspect of the present invention, provided is a method for controlling a mobile object group, the group being operable to move to a plurality of places under the control of a moderator agent and to execute an appropriate activity at each of the places, the method comprises the steps of: (a) executing, at a first place, a first activity linked with a first mobile moderator agent to acquire first processing results; (b) requesting that the first mobile moderator agent, which exists in the first place and which holds the first processing results, move to a second place; (c) executing, at a third place, a second activity linked with a second mobile, moderator agent to acquire second processing results; (d) requesting that the second mobile moderator agent, which exists in the third place and which holds the second processing results, move to the second place; (e) requesting that the second mobile moderator agent at the second place transmit the second processing results to the first mobile moderator agent; and (f) the first mobile moderator agent at the second place holding both the first and the second processing results. In claims of the specification of the invention, the transmission of the second processing results by the second mobile moderator agent to the first mobile moderator agent includes not only the transmission of a plan node copy, but also the transmission of the contents of the Results.

According to yet another aspect of the present invention, provided is a method for controlling a mobile object group, the group being operable to move to a plurality of places under the control of a moderator agent and to execute an appropriate activity at each of the places, the method comprises the steps of: (a) executing, at a first place, a first activity linked with a first mobile moderator agent having agent identification information and acquiring first processing results; (b) requesting that the first mobile moderator agent, which exists in the first place and which holds the first processing results, move to a second place; (c) executing, at a third place, a second activity linked with a second mobile moderator agent having the same agent identification information as that of the first mobile moderator agent and acquiring second processing results; (d) requesting that the second mobile moderator agent, which exists in the third place and which holds the second processing results, move to the second place; (e) requesting that the second mobile moderator agent at the second place transmit the second processing results to the first mobile moderator agent; (f) searching the second place for a mobile moderator agent having the same identification information as the agent identification information; and (g) the first mobile moderator agent at the second place holding both the first and the second processing results.

According to yet an additional aspect of the present invention, provided is a mobile object group, the group being operable to move from a first place to a second place and to execute a first activity at the first place and a second activity at the second place, the mobile object group comprises: (a) a plan object for managing turns of the first activity and the second activity for the execution; and (b) a plan iterator for determining for which of the first activity and the second activity authority for execution currently exists.

According to yet one further aspect of the present invention, provided is a method for generating a mobile object group, the group including (i) a first activity to be executed at a first place, (ii) a second activity to be executed at a second place, and (iii) a moderator template for requiring a moderator agent to move to the second place, the moderator agent being operable to control the movement of the mobile group at the first place, the method comprises the steps of: (a) generating, during the first activity, a successor list containing link information related to the moderator template; (b) generating, by means of the moderator template, a predecessor list containing link information related to the first activity and a successor list containing link information related to the second activity; and (c) generating, during the second activity, a predecessor list containing link information related to the moderator template.

According to one more aspect of the present invention, provided is a method for generating a mobile object group, the group including (i) a first activity to be executed at a first place, (ii) a second activity to be executed at a second place, and (iii) a moderator template for requiring a moderator agent to move to the second place, the moderator agent being operable to control the movement of the mobile group at the first place, the method comprises the steps of: (a) generating a list for managing turns of the first activity, the moderator template and the second activity for the execution; (b) generating, during the first activity, a successor list containing link information related to the moderator template; (c) generating, by means of the moderator template, a predecessor list containing link information related to the first activity and a successor list containing link information related to the second activity; and (d) generating, during the second activity, a predecessor list containing link information related to the moderator template.

According to still one more aspect of the present invention, provided is an apparatus for generating a mobile object group, the group including (i) a first activity to be executed at a first place, (ii) a second activity to be executed at a second place, and (iii) a moderator template for requiring a moderator agent to move to the second place, the moderator agent being operable to control the movement of the mobile group at the first place, the apparatus comprises: (a) means for generating, during the first activity, a successor list containing link information related to the moderator template; (b) means for generating, by means of the moderator template, a predecessor list containing link information related to the first activity and a successor list containing link information related to the second activity; and (c) means for generating, during the second activity, a predecessor list containing link information related to the moderator template.

According to yet one more aspect of the present invention, provided is a computer-readable memory medium storing a program for generating a mobile object group, the group including (i) a first activity to be executed at a first place, (ii) a second activity to be executed at a second place, and (iii) a moderator template for requiring a moderator agent to move to the second place, the moderator agent being operable to control the movement of the mobile group at the first place, the program comprises: (a) program code for instructing the computer to generate, during the first activity, a successor list containing link information related to the moderator template; (b) program code for instructing the computer to generate, by means of the moderator template, a predecessor list containing link information related to the first activity and a successor list containing link information related to the second activity; and (c) program code for instructing the computer to generate, during the second activity, a predecessor list containing link information related to the moderator template.

### Brief Description of the Drawings

Fig. 1 is a diagram illustrating a distributed network environment wherein a mobile agent of the present invention moves.
Fig. 2 is a diagram showing an example form wherein the mobile agent of the invention moves across the distributed network.
Fig. 3 is a block diagram illustrating an example hardware arrangement for a client system or for a server system according to the present invention.
Fig. 4 is a block diagram illustrating example processing components at the client site according to the present invention.
Fig. 5 is a block diagram illustrating example processing components at the server site according to the present invention.
Fig. 6 is a diagram showing objects according to the preferred embodiment of the present invention.
Fig. 7 is a diagram showing an object according to the preferred embodiment of the present invention.
Fig. 8 is a diagram showing the flow of a message exchanged between objects according to the preferred embodiment of the present invention.
Fig. 9 is a diagram showing a user interface for a development support tool according to the preferred embodiment of the present invention.
Fig. 10 is a diagram showing a user interface for a development support tool according to the preferred embodiment of the present invention.
Fig. 11 is a diagram showing a user interface for a development support tool according to the preferred embodiment of the present invention.
Fig. 12 is a diagram showing the processing according to the preferred embodiment of the present invention whereby an event is transmitted to a mobile agent and is executed.
Fig. 13 a flowchart showing the processing for adding a plan node to a plan object according to the preferred embodiment of the present invention.
Fig. 14 is a conceptual diagram illustrating an example condition wherein a plan object is linked with plan node objects.
Fig. 15 is a conceptual diagram illustrating an example condition wherein a plan object is linked with plan node objects.
Fig. 16 is a conceptual diagram illustrating an example condition wherein a plan object is linked with plan node objects.
Fig. 17 is a flowchart showing the processing for executing a plan object according to the preferred embodiment of the present invention.
Fig. 18 is a functional block diagram illustrating a moderator template according to the preferred embodiment of the present invention.
Fig. 19 is a conceptual diagram illustrating a place according to the preferred embodiment of the present invention.
Fig. 20 is a flowchart showing the outline processing for a moderator template according to the preferred embodiment of the present invention.
Fig. 21 is a conceptual diagram showing the condition according to the preferred embodiment of the present invention wherein a mobile object group moves from an origin place to a destination place.
Fig. 22 is a conceptual diagram showing the condition according to the preferred embodiment of the present invention wherein a mobile object group moves from an origin place to a destination place.
Fig. 23 is a flowchart showing the processing at the origin of an iteration template according to the preferred embodiment of the present invention.
Fig. 24 is a conceptual diagram showing the condition according to the preferred embodiment of the present invention wherein a mobile object group moves from an origin place to a destination place.
Fig. 25 is a conceptual diagram showing the condition according to the preferred embodiment of the present invention wherein a mobile object group moves from an origin place to a destination place.
Fig. 26 is a flowchart showing the processing at the origin for an ANDSplit template according to the preferred embodiment of the present invention.
Fig. 27 is a flowchart showing the logic for determining a current node according to the preferred embodiment of the present invention.
Fig. 28 is a flowchart showing the processing at the destination for an ANDJoin template according to the preferred embodiment of the present invention.
Fig. 29 is a flowchart showing the processing at the destination for the ANDJoin template according to the preferred embodiment of the present invention.
Fig. 30 is a diagram for explaining the outline of the processing at the destination for the ANDJoin template according to the preferred embodiment of the present invention.
Fig. 31 is a conceptual diagram showing the condition according to the preferred embodiment of the present invention wherein a mobile object group moves from the origin place to the destination place.
Fig. 32 is a flowchart showing the processing at the origin of an ORSplit template according to the preferred embodiment of the present invention.
Fig. 33 is a conceptual diagram showing the condition according to the preferred embodiment of the present invention wherein a mobile object group moves from the origin place to the destination place.
Fig. 34 is a flowchart showing the processing at the destination for an ORJoin template according to the preferred embodiment of the present invention.

### Description of the Preferred Embodiment

### A. Distributed network environment and hardware arrangement for each node

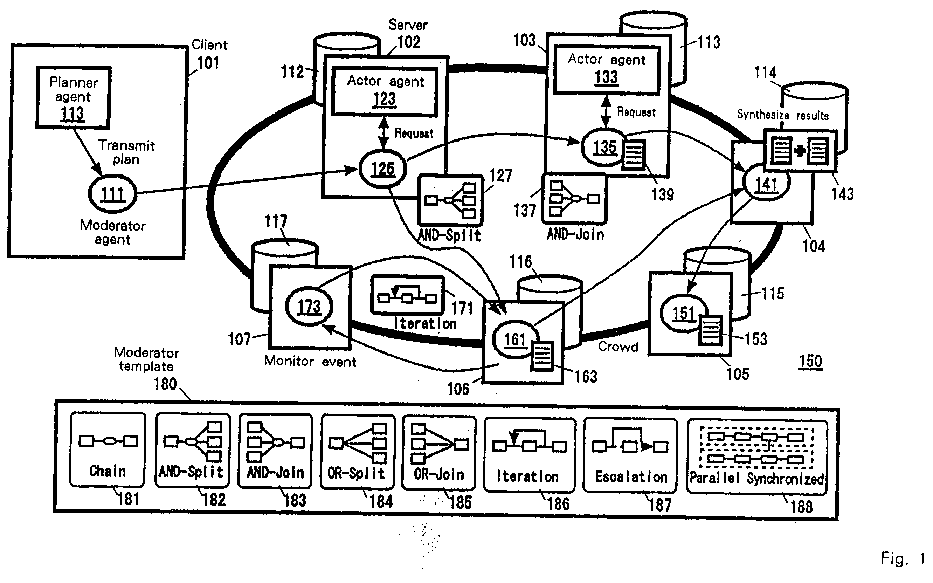

One embodiment of the present invention will now be described while referring to the accompanying drawings. In Fig. 1 is shown a distributed network environment 150 for executing a mobile object according to the present invention. Places 102 through 107, where services can be provided for mobile agents 125, 135 and 141, are prepared in servers 112 through 117. In the distributed network environment, a group of such places is called a crowd.

A planner agent 113 exists in a client system 101 to generate mobile agents. The planner agent 113 transmits a generated plan to a moderator agent 111, which executes the plan, so as to move the mobile agent to a designated place.

The mobile agent 125 can contact other agents that exist at the places 102 through 107 (in particular, an agent that contacts a mobile agent and provides a service is called an actor agent), and can transmit requests and receive results obtained as a consequence of the request. The places support the contacts between the agents. The mobile agent 125 can hold Results 139, 143, 153 and 163, which are the results obtained as a consequence of the requests received from an actor agent, while continuing to move. Further, during movement, the Results can be synthesized or divided, or various other processing can be performed for the Results.

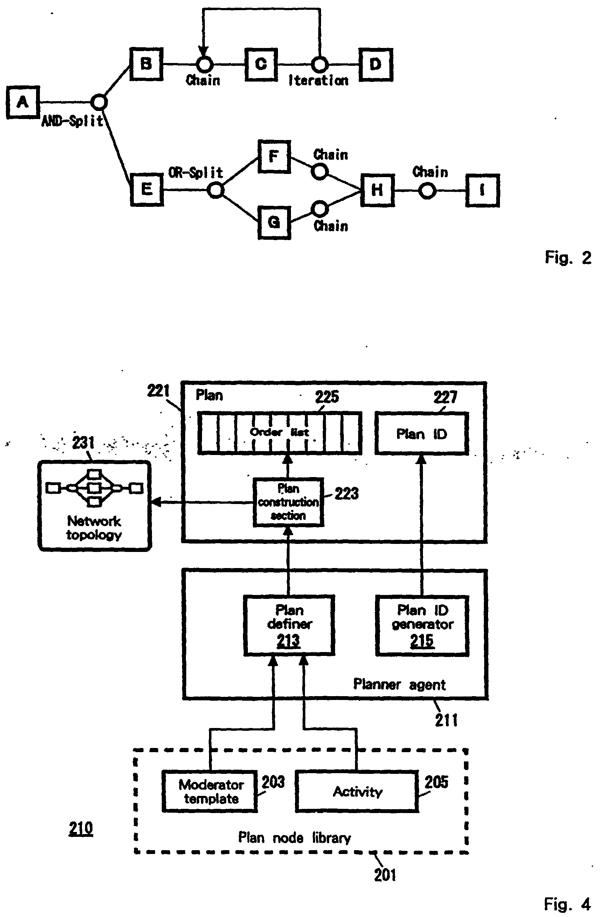

In this invention, the movement, the splitting and the disposal of a mobile agent are controlled by moderator templates 181 through 187. A user can combine various templates in accordance with the types of processes, and can easily define a complicated job such as is shown in Fig. 2.

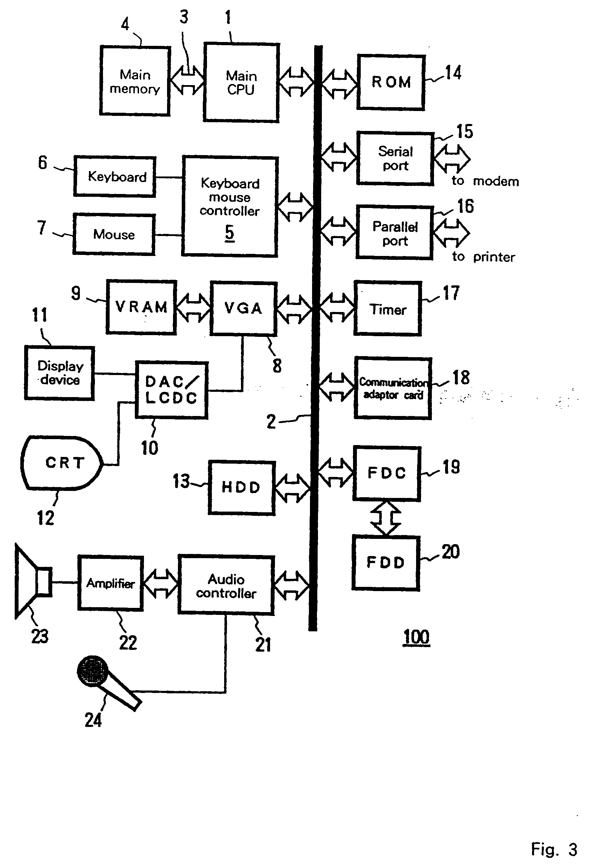

Fig. 3 is a schematic diagram illustrating the hardware arrangement of each node (a server or a client site) that exists in the distributed network environment shown in Fig. 1. Each node 100 includes a central processing unit (CPU) 1 and a memory 4. Across a bus 2, the CPU 1 and the memory 4 communicate with a hard disk drive 13 that serves as an auxiliary memory device. A floppy disk drive (or a memory medium driver, such as an MO or a CD-ROM) 20 is connected to the bus 2 via a floppy disk controller 19.

A floppy disk (or a memory medium, such as an MO or a CD-ROM) is inserted into the floppy disk drive 20, and computer software for collaborating with an operating system when giving an instruction to the CPU 1 and for accomplishing the present invention is recorded on the floppy disk, or the hard disk drive 13, and in the ROM 14. The computer software is executed by loading it into the memory 4. The computer software can be compressed, or can be divided into a plurality of portions to be recorded on a plurality of media.

The node system 100 can also include user interface hardware. Example user interface hardware components are a pointing device (a mouse, a joy stick, etc.) 7 and a keyboard 6 for data input, and a display 12 for providing visual data for a user. In addition, a printer can be connected to the system 100 at a parallel port 16. The node system 100, which can have a modem connected to a serial port 15, is connected with a network via the serial port 15 and a modem, or via a token ring or a communication adaptor 18 for communication with another computer system.

It can be easily understood that the present invention can be achieved by a common personal computer (PC), a workstation, a general-purpose apparatus, or a combination of the three. It should be noted that these components are only examples and that not all of them are necessarily required for the present invention. Particularly, since a server can be remote controlled, a user interface is not required for the server, and only basic data processing functions, such as a CPU and a memory, and a communication function are required.

An operating system for both a client system and a server system can be an operating system that supports a standard GUI multi-window environment, such as WindowsNT (a trademark of Microsoft Corp.), Windows95 (a trademark of Microsoft Corp.), Windows3.x (a trademark of Microsoft Corp.), OS/2 (a trademark of IBM Corp.) or X-Windows (a trademark of MIT) on AIX (a trademark of IBM Corp.); an operating system in a character based environment, such as PC-DOS (a trademark of IBM Corp.) or MS-DOS (a trademark of Microsoft Corp.); or a real time OS, such as OS/Open (a trademark of IBM Corp.) or VxWorks (a trademark of Wind River Systems Inc.), and is not limited to a specific operating system environment.

### B. System Configuration

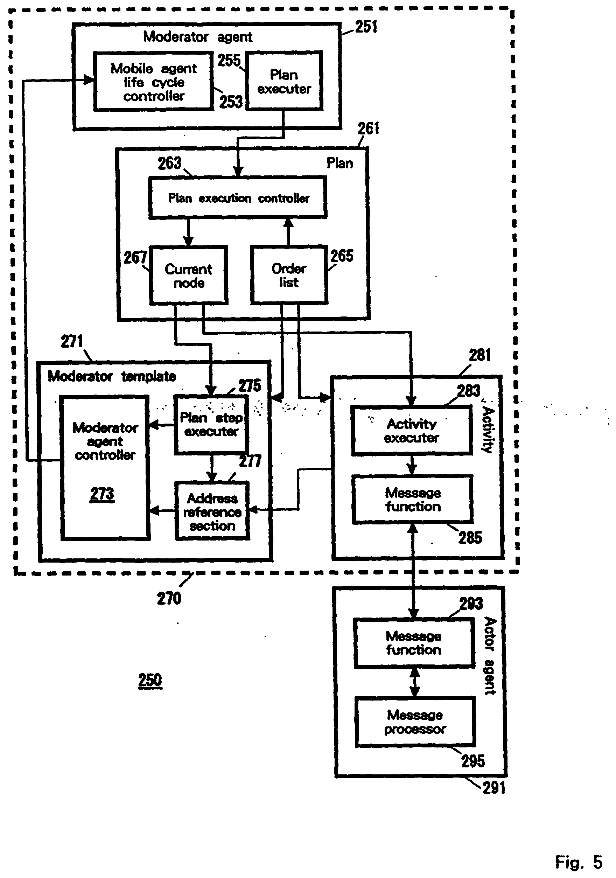

The system configuration of a client and of a server according to the preferred embodiment of the present invention will now be described while referring to block diagrams in figs. 4 and 5.

Fig. 4 is a block diagram illustrating example processing components in a client system 210. A planner agent 211 includes a plan definer 213 and a plan ID generator 215. The plan ID generator 215 allocates a unique network plan ID to a plan. In the preferred embodiment of the present invention, the plan ID generator 215 synthesizes a URL for the Internet, a port number, an agent ID (allocated to a planner agent) and a serial number (allocated each time a planner agent generates a plan ID) to generate a plan ID.

The plan definer 213 acquires a moderator template 203 and an activity 205 from a plan node library 201, and generates a moderator agent and a plan. The plan thus generated includes a plan construction section 223 for managing information for a moderator template and an activity to be executed, and an order list 225 for defining the order for a moderator template and an activity. The plan construction section 223 has information for correlating plan node objects (the general term for moderator templates and activities) and forms a network topology 231.

Fig. 5 is a functional block diagram illustrating example processing components in a server system 250. A mobile object group 270 includes a moderator agent 251, a plan object 261, a moderator template 271 and an activity 281. The moderator agent 251 has a mobile agent life cycle controller 253 and a plan executer 255. The mobile agent life cycle controller 253 controls the movement, copying and disposal of the mobile object group 270. The plan executer 255 ascertains arrival at a new place, and instructs the plan object 261 to execute a plan.

The plan object 261 includes a plan execution controller 263, a current node 267 and an order list 265. When the plan execution controller 263 receives from the plan executer 255, in the moderator agent 251, an instruction to execute a plan, the plan execution controller 263 refers to the current node 267 and the order list 265 and determines which plan node objects 271 and 281 are currently available to perform the execution, and then requests the plan node objects 271 and 281 to execute the plan.

The current node 267 corresponds to a plan node iterator, which will be described later, and monitors which plan node object is being executed. The order list 265 is a list for specifying which plan node objects 271 and 281 are to execute the plan. When no branching occurs, in accordance with the entry order in the order list 265 the plan node objects 271 and 281 are requested to execute the plan.

The moderator template 271 includes a moderator agent controller 273, a plan step executor 275 and an address referral section 277. The moderator agent controller 273 requests that the mobile agent life cycle controller 253 in the moderator agent 251 move, copy or dispose of the mobile object group 270. The plan step executor 275 is defined differently in accordance with the type of moderator templates, and manages instructions that are to be executed at places before and after the movement. The address referral section 277 acquires an address from an activity and notifies the moderator agent controller 273 of an address to which to move.

The activity 281 has an activity executor 283 and a message function 285. The activity executor 283 stores instructions that are executed at respective places to which the mobile agent travels, and the Results that the mobile agent obtains at these places. The message function 285 exchanges messages with an actor agent 291.

The actor agent 291 is another agent that exists at the place, and provides services as requested by the activity 281. The actor agent 291 has a message function 293 for exchanging messages with the activity 261, and a message processor 295 for ascertaining the meaning of the contents of a request and for providing service.

The functional blocks in Figs. 4 and 5 have been explained. These functional blocks are logical functional blocks, and are not implemented by a set of hardware or software components. They can, however, be implemented by compound hardware or software components, or by hardware or software components used in common. In addition, not all of the functional blocks in Figs. 4 and 5 are required for the present invention. For example, the order list 265 is not particularly required because the current node manger 267 directly manages current nodes and because in the ANDJoin process, etc., only a moderator agent for obtaining other Results need be determined.

### C. Object configuration

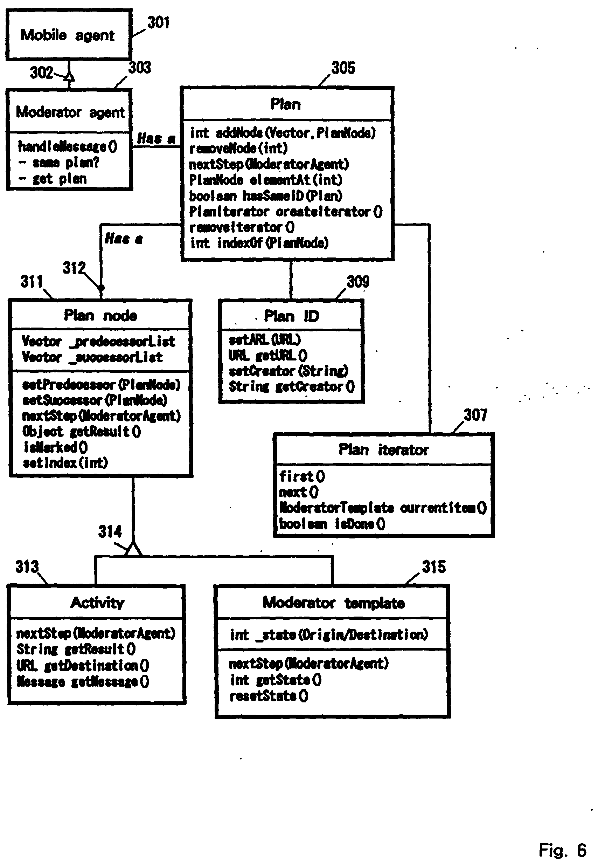

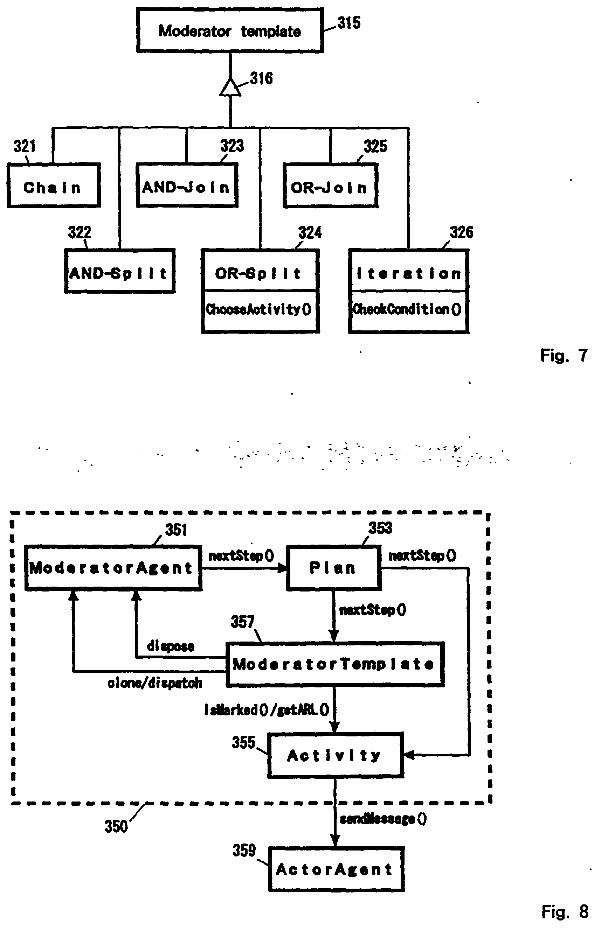

Figs. 6 and 7 are diagrams illustrating a mobile object. Classes for a moderator agent 303, a plan 305, a plan ID 309 and a plan iterator 307 each has a method, and classes for templates 321 through 326, such as a plan node 311, an activity 313, a moderator template 315 and a Chain 321, have data and a method.

In Figs. 6 and 7, triangular symbols 302, 314 and 316 indicate that data and methods of the upper classes are inherited and a black dot 312 indicates that a plurality of lower classes exist. The plan node 311, which is an abstract class, defines both the moderator template class 315 and the activity class 313 by using a common interface. Therefore, the plan 305 can handle both classes equally for the generation of a plan or during the execution of a plan.

A mobile agent 301 is a function (place class) currently provided at respective places in a distributed computer environment. A user can easily create a mobile agent (moderator agent) by sending to this class an API for instructing the preparation of a mobile agent. At present, this function is supported by both the Java base mobile agent and the TeleScript mobile agent, which were described in "Description of the Background".

The plan node class 311 has a successor list and a predecessor list, and manages a relationship among a plurality of plan nodes. The plan node class 311 provides methods for "setPredecessor" and "setSuccessor," and defines the relationship between nodes. A specific plan node class can identify the relationships between methods.

Since the moderator template class 315 is coupled with the activity class 313 that is executed at different places, the moderator template class 315 has state information for distinguishing an origin (a place before movement) from a destination (a place after movement). In the preferred embodiment of the present invention, a moderator template can only be coupled with an activity object. Chain and other templates are provided for the moderator template, so that a basic mechanism for dividing work among a plurality of split moderator agents, etc., can be provided.

Fig. 8 is a diagram showing a primary flow for messages for the classes according to the preferred embodiment of the present invention. The moderator agent 351 transmits nextStep (an instruction for the execution of the next step) to a plan 353. Upon receipt of this instruction, the plan 353 transmits nextStep to a plan node object (a moderator template 357 or an activity 355). The activity 355 transmits sendMessage (a request for transmission of a message) to an actor agent 359 to execute a request designated by a user. In accordance with the message type and the condition, the moderator template 357 transmits getARL (a transmission command of an address), or isMarked (marking), to the activity 355. In addition, the moderator template 357 transmits clone (a preparation request of a clone), dispatch (a dispatch request) and dispose (a disposal request) to the moderator agent 351.

### D. Preparation of planner agent

A planner agent is an instruction group to be executed by a client site. When the instructions are executed, a generation request of a moderator agent is transmitted, and a plan object for defining a series of activities to be executed is generated and transmitted to a moderator agent.

As is described above, the moderator agent is generated by employing functions (place classes) that are currently provided for the respective places. In the preferred embodiment of the present invention, an API for instructing the preparation of a mobile agent is transmitted to the Aglets class of a Java base mobile agent to generate a moderator agent.

The plan production process is roughly classified into a procedure for generating a plan ID, and into a procedure for establishing the linking condition relative to an object located at a position lower than a plan object.

In the preferred embodiment, a unique plan ID that is specifically determined by a global network is allocated for a plan object. In the preferred embodiment, the plan ID generator 215 (Fig. 4) prepares a plan ID by synthesizing a URL for the Internet, a port number, an agent ID (allocated for a planner agent), and a serial number (allocated each time a planner agent produces a plan ID).

Example coding used by the plan ID generator 215 is shown in Table 1. In the preferred embodiment of the present invention, the instruction group of the plan ID generator is provided as a program part for a user.

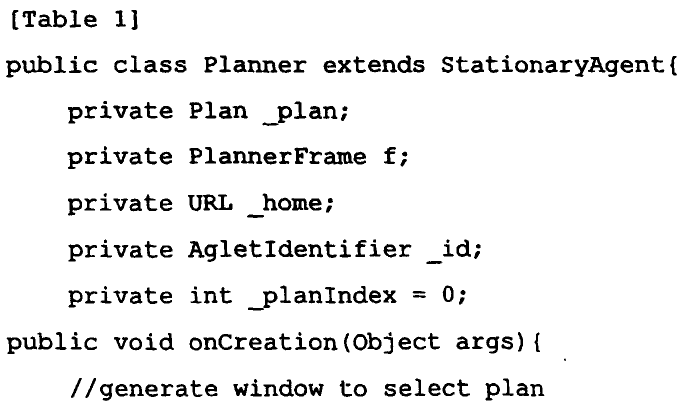

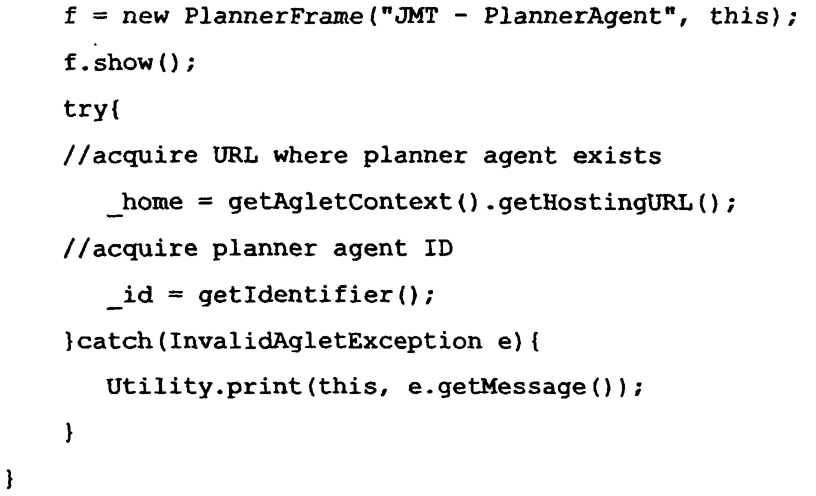

Table 2 shows coding when Chain template in the plan definer 213 (Fig. 4) is employed. In one mode for the preferred embodiment of the present invention, sample code including a template type is provided for a user (a programmer). The user re-creates a desired coding by using the sample code to form this instruction group.

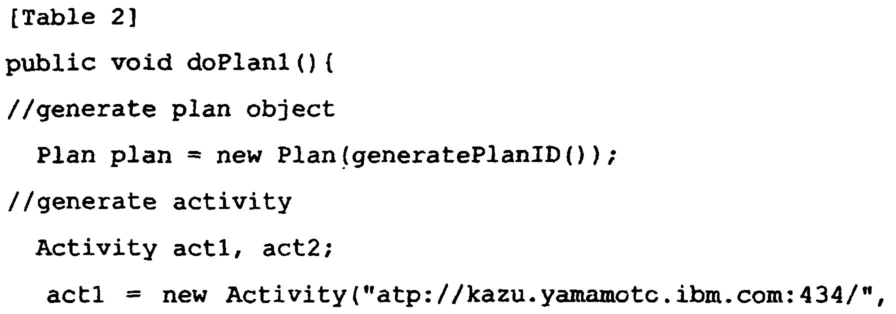

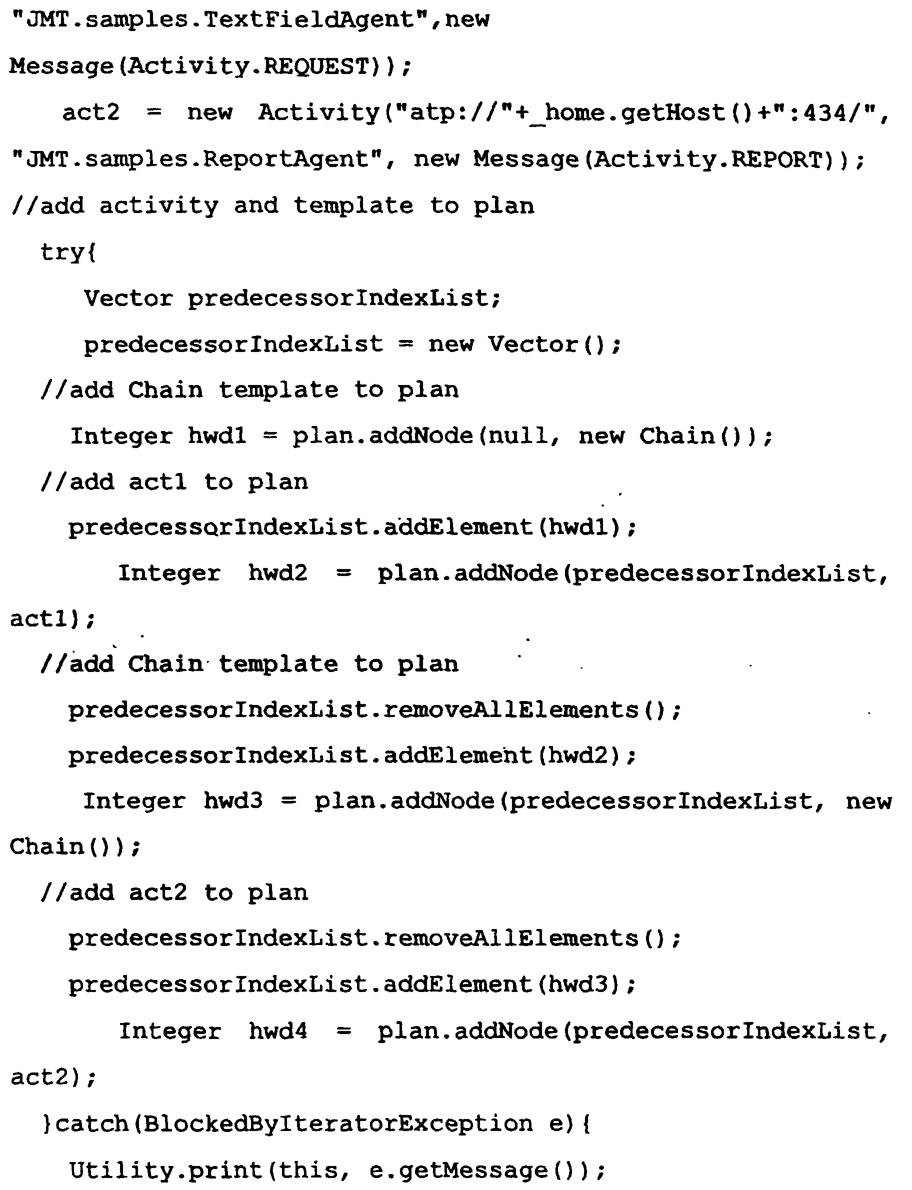

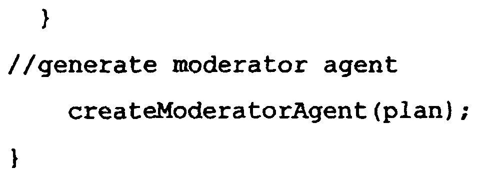

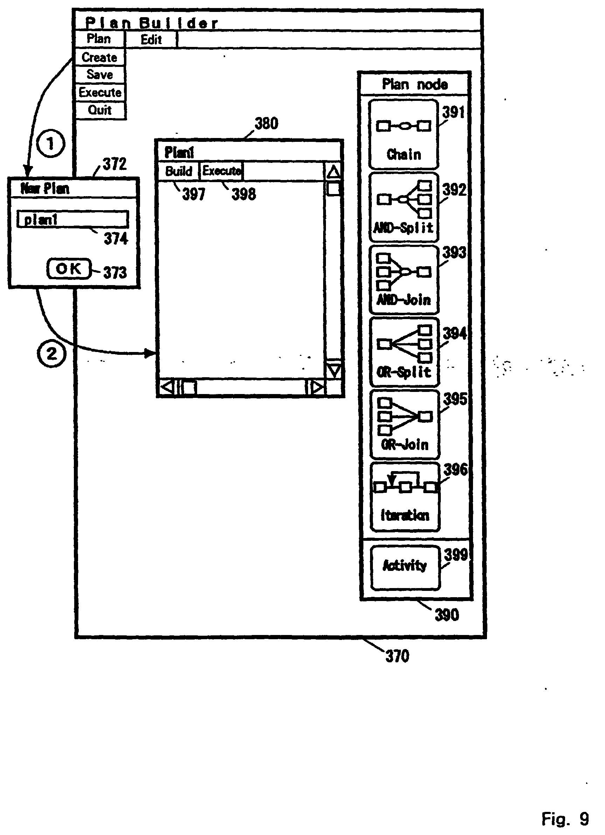

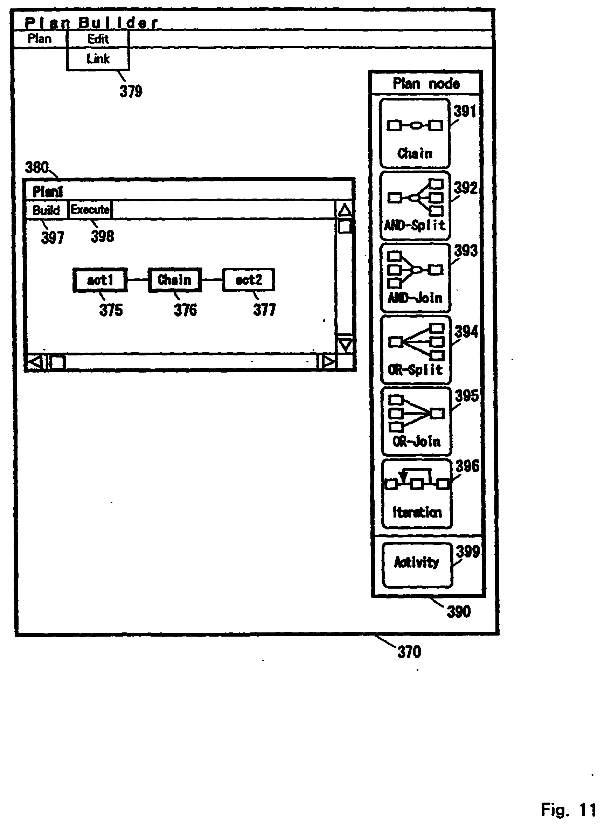

In another mode for the preferred embodiment of the present invention, a development support tool is provided to enable a user to easily perform this coding. Figs. 9 through 11 are diagrams illustrating a user interface for a development support tool according to the preferred embodiment of the present invention. A user can easily generate the above coding for the plan definer by using the development support tool.

Since the development support tool constitutes a well known method provided by Workflow Automation ("Workflow Automation" is a trademark of Ultimus LLC Corp.), etc. (information can be acquired at http://www.ultimus1.com, etc.), specific means for accomplishing the function will not be described and only the procedures performed by a user will be explained.

First, a user selects Create 371 from a pulldown menu, and clicks on it using a pointing device. The planner agent development support tool then displays a dialogue box for inputting the name of a plan. The user can therefore manage the plan with using a name that differs from a plan ID and is easy and familiar to the user. When the user enters the name of the plan in an entry box 374 and depresses an OK button 373, a plan definition window 380 is opened.

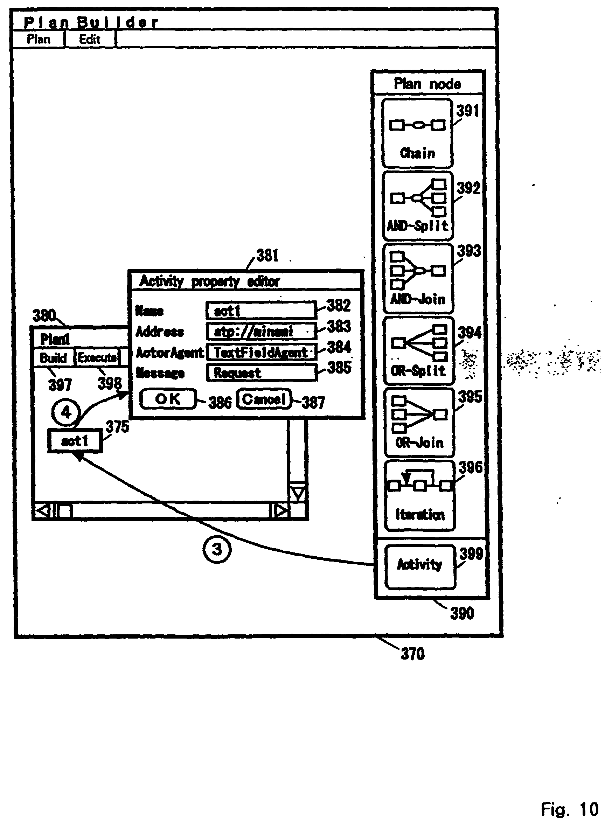

By using the pointing device, the user drags an activity plan icon 399 from a plan node box 390 and drops it in the plan definition window 380. Then, as is shown in Fig. 10, an activity property editor window 381 is opened.

Entry boxes for an activity name 382, an address name (an address for a place executing an activity) 383, an actor agent name 384, and a message 385 are prepared for the activity property editor window 381. The user inputs data as desired in the respective entry boxes, and clicks an OK button 386 to define the activity.

Similarly, a Chain icon 391 is dragged from the plan node box 390 to a position to the right of or under act1 in the plan definition window 380, and is dropped there. In the preferred embodiment of the present invention, when a template icon other than ORSplit is dropped, a template property editor window is not displayed. When an ORSplit icon is dropped, however, the template property editor window is displayed, and the selection conditions for an activity are input. Then, as well as act1, an act2 activity is dragged and dropped to the right of or under the Chain, thereby setting a property.

Following this, the user clicks on and selects two objects (e.g., act1:375 and Chain 376) in the plan definition window 380 that are to be linked, and selects Link 379 in an edit menu. Then, the two objects are linked together (a successor list and a predecessor list are generated).

When all of the objects have been linked together, the user clicks on Construction 397 in the plan definition window 380. The planner agent development support tool adds the elements to the plan object to generate a planner agent.

When the user clicks on Execution 398 in the plan definition window 380, an event is transmitted to the obtained planner agent and a place class, a moderator agent is generated, and the planner agent generates a plan and transmits it to the moderator agent. The moderator agent automatically executes the received plan.

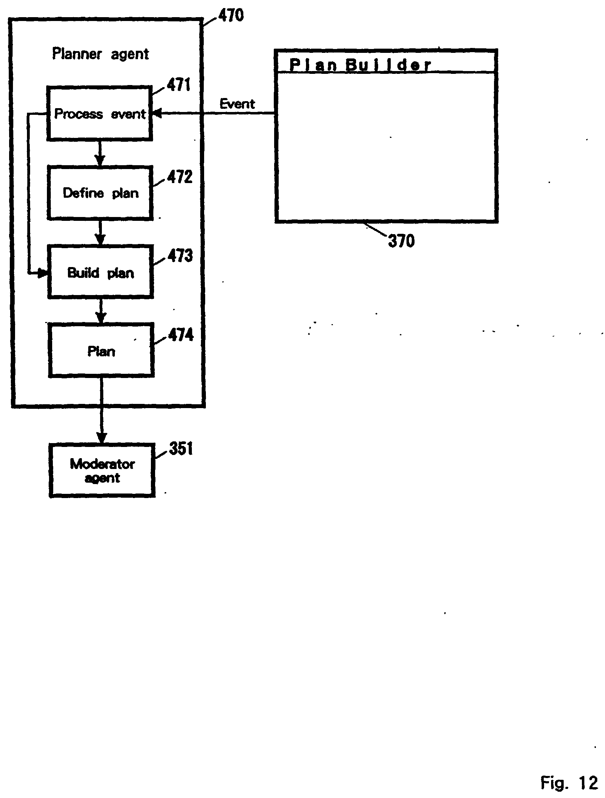

This process is shown in Fig. 12. An event that has occurred in the plan definition window 380 is transmitted to a planner agent 470. The planner agent 470 analyzes the event and executes object code that corresponds to Tables 1 and 2, thereby beginning definition 472 and construction 473 of a plan. A plan 477 that is thus generated is transmitted to the moderator agent 351, which in turn executes each step of the plan.

In the preferred embodiment of the present invention, after a plan object has been prepared, a plurality of plan nodes may be added by using method "addNode" in the plan class. In addition, after the plan object has been prepared, a plurality of plan nodes may be removed by using method "RemoveNode" in the plan class and the successor list may be updated.

### D. Generation of plan

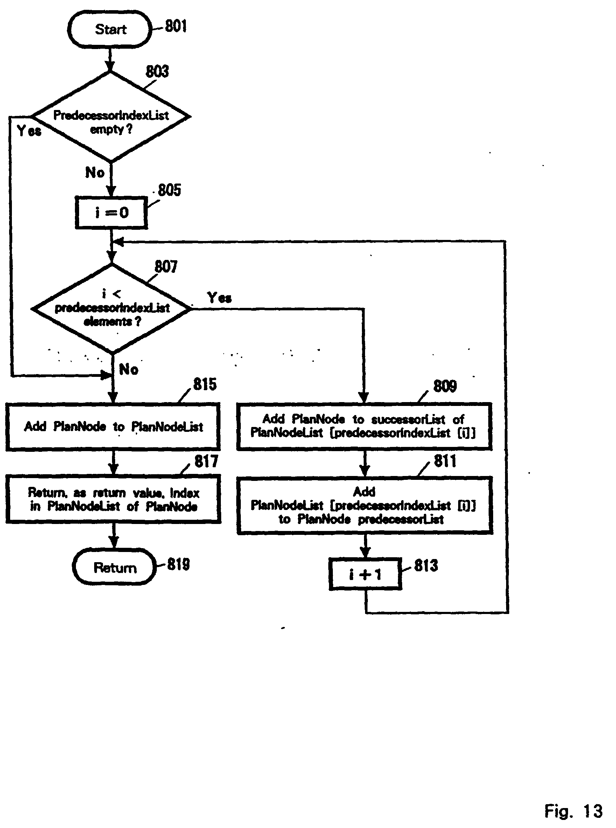

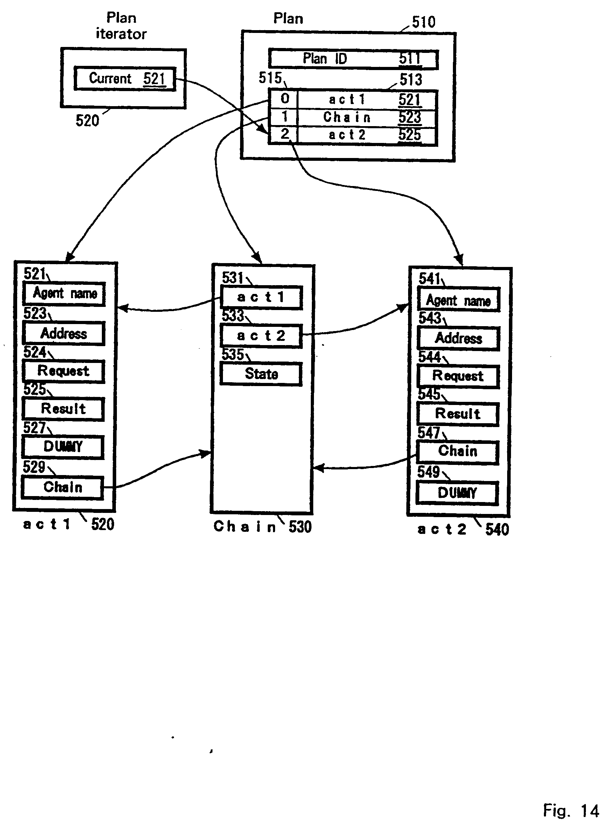

D-1. Topology of case in which Chain template is included The processing whereby the planner agent shown in Tables 1 and 2 generates a plan object will now be explained by employing, as an example, a plan object that includes a Chain template generated by the development support tool, which has been explained while referring to Figs. 9 through 11. Fig. 13 is a flowchart for the processing for adding a plan node to a plan object, and Fig. 14 is a conceptual diagram illustrating a condition where a plan object is linked with a plan node object.

The Chain template, which is the simplest template, links two activities in different places. In the origin, the Chain receives an ARL (address) for an activity of a successor, and moves a mobile object group to a destination. The origin place and the destination place may be identical.

When the planner agent is executed, first a plan object is generated and a plan ID is set. Next, activity object 520 and 540, which constitute a plan, are generated. As is shown in Fig. 14, a name 521 for an agent for which service is requested, an address 523 for a server for execution, and the contents 524 of a request are stored in each activity. In the example in Fig. 14, two activity objects are prepared.

Following this, the two activity objects are stored in a plan object 510. A Chain template 530, which will be described later, is employed to couple the two activities. Before the activities are stored in the plan object 510, an element after which these activities are coupled must be designated. For this reason, a predecessor index list 515 is employed. In the preferred embodiment of the present invention, the predecessor index list 515 is implemented as a list.

When the predecessor index list 515 is generated in the plan object 510, the planner agent adds the first activity object (act1 520) to the plan object 510. In Fig. 13 is shown the processing for adding a plan node to the plan object 510. The planner agent examines the predecessor index list 515 to determine whether or not it is vacant (block 803). Since act1 520 is the first element and the predecessor index list 515 is empty, act1 520 is added to a plan node list 513 (block 815). The plan object 510 returns, to the planner agent, an index in the plan node list 513 as a return value (block 817). Thereafter, the program control is returned (block 819). In this case, index "0" is returned as a return value.

Following this, the Chain object 530 is added to the plan object 510. In this case, the processing in Fig. 13 is restarted. The planner agent examines the predecessor index list 515 to determine whether or not it is empty (block 803), and since act1 520 has been registered, program control advances to block 805. At blocks 805 and 807, a check is performed whether or not all the elements in the predecessor index list 515 have been processed.

Then, the Chain object 530 is added to the plan object 510 (block 809). First, the return value "0," obtained when act1 was added, is entered into the predecessor index list 515 in order to designate act1 (520), following which the activity is coupled.
predecessor index list [0]

The Chain object is added after act1. The plan object 510 stores the Chain object in a successor list 529 in act1, which is designated in the predecessor index list 515 (block 809). Then, act1 is stored in the predecessor list 531 of the Chain 530 (block 811). Finally, Chain 523 is stored in the plan node list 513 of the plan object 510, and its index is returned as a return value ("1" in this case) to the planner agent.

Next, act2 (540) is added to the plan object 510. First, the predecessor index list 515 is cleared (information concerning act1 is cleared), and a return value (1) obtained when the Chain was added to the plan is set.
predecessor index list [1]

Then, act2 is added following the Chain. As well as the case of the Chain, the plan object 510 stores the act2 object in the successor list 529 for the Chain designated in the predecessor index list 515 (block 809). Following this, the Chain is stored in a predecessor list 531 in the act2 540 (block 811). Finally, act2 is stored in the plan node list 513 of the plan object 510, and its index is returned as a return value ("2" in this case) to the planner agent.

### D-2. Topology of case in which Iteration template is included

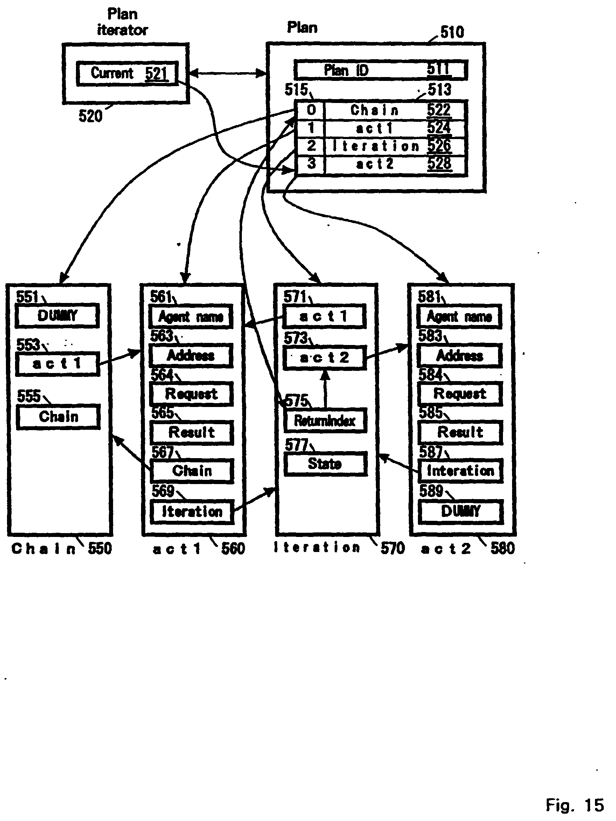

Fig. 15 is a conceptual diagram illustrating the condition where the plan object 510 is linked with the plan node objects. These objects are linked in the same manner as for topology of a case in which the Chain template is included. It should be noted that, as is shown in Fig. 15, an Iteration template 570 includes a return index 575 as information for a loop return destination. In the preferred embodiment of the present invention, a value for the plan object 510 in the predecessor index list 515 that corresponds to a return destination object (Chain 550) is set in the return index 575. Table 3 shows a coding example for a planner agent for topology of a case in which the Iteration template is included.

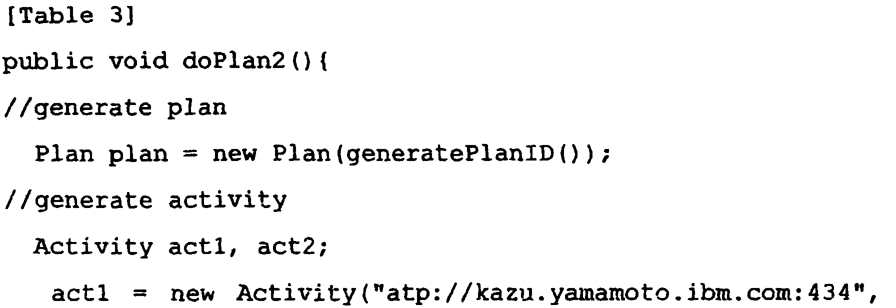

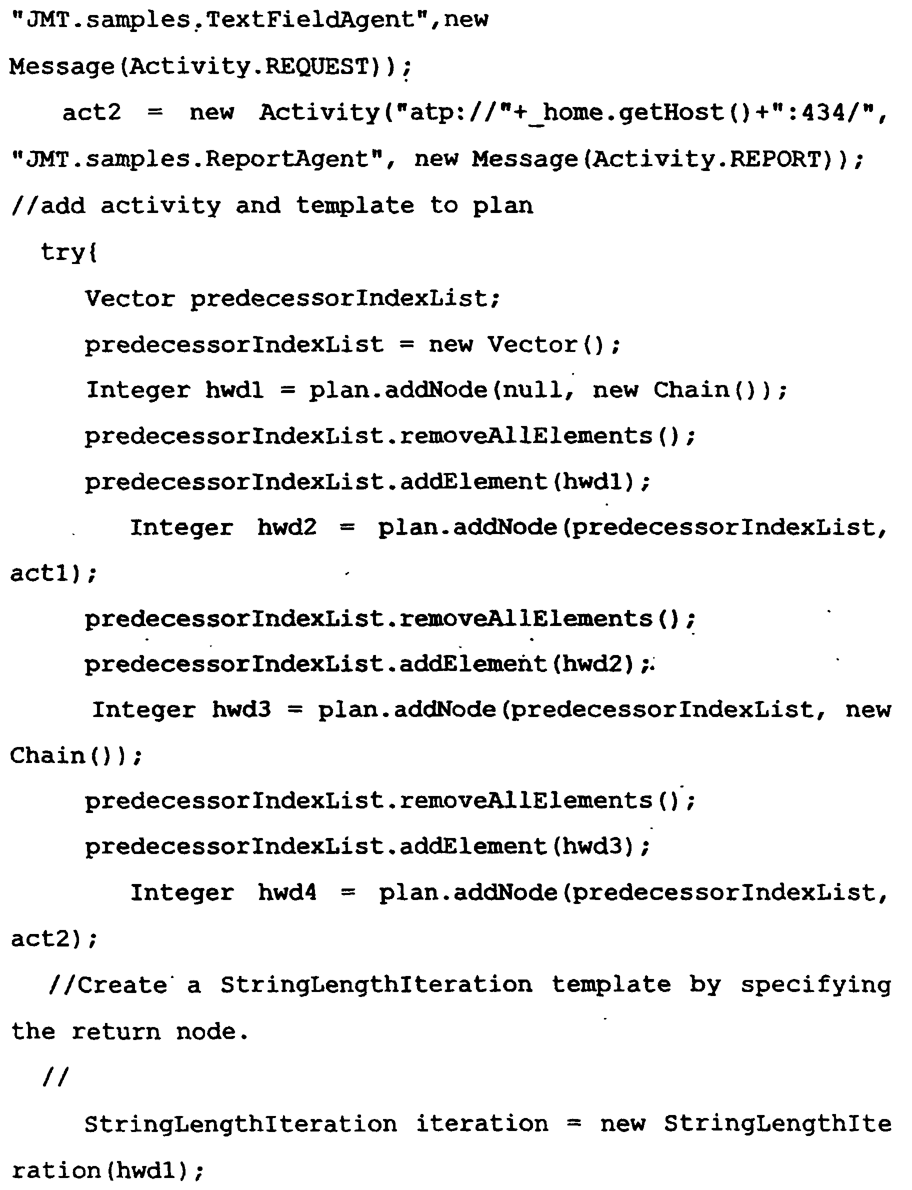

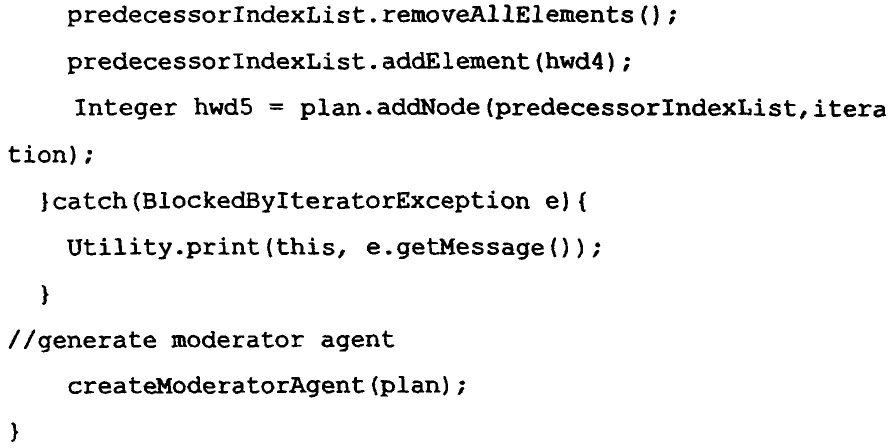

### D-3. Topology of case in which ANDSplit and ANDJoin templates are included

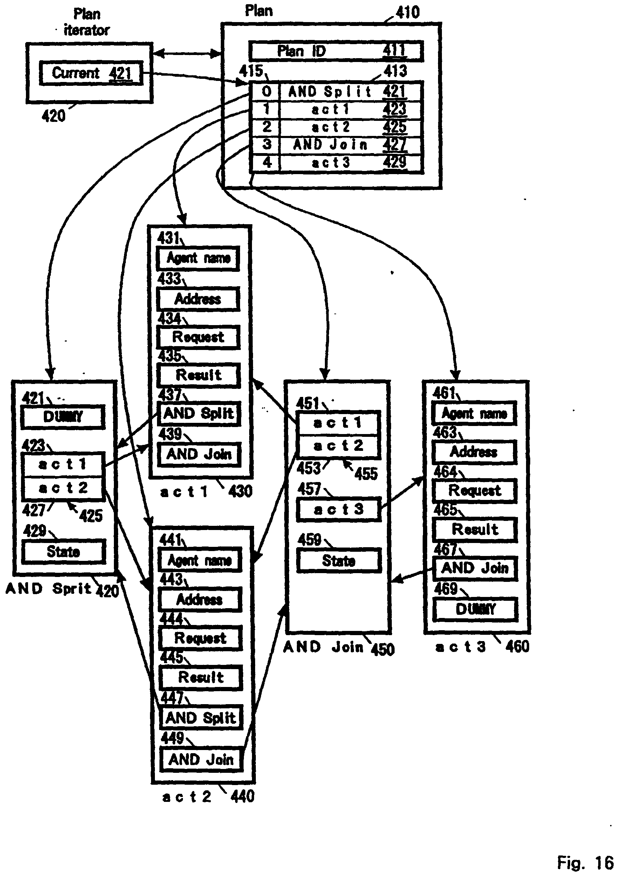

Fig. 16 is a conceptual diagram illustrating the condition where a plan object 410 is linked with plan node objects. The object group is linked in the same manner as described in topology of a case in which Chain template is included. It should be noted that the ANDSplit template has one predecessor activity and a plurality of successor activities. The successor activities can be executed in parallel in different places by the ANDSplit template.

On the other hand, the ANDJoin template has a plurality of predecessor activities and one successor activity. At a destination, a plurality of moderator agents are united to constitute one agent under the control of the ANDJoin template. Table 4 shows a coding example for a planner agent for topology of a case in which the ANDSplit template and the ANDJoin template are included.

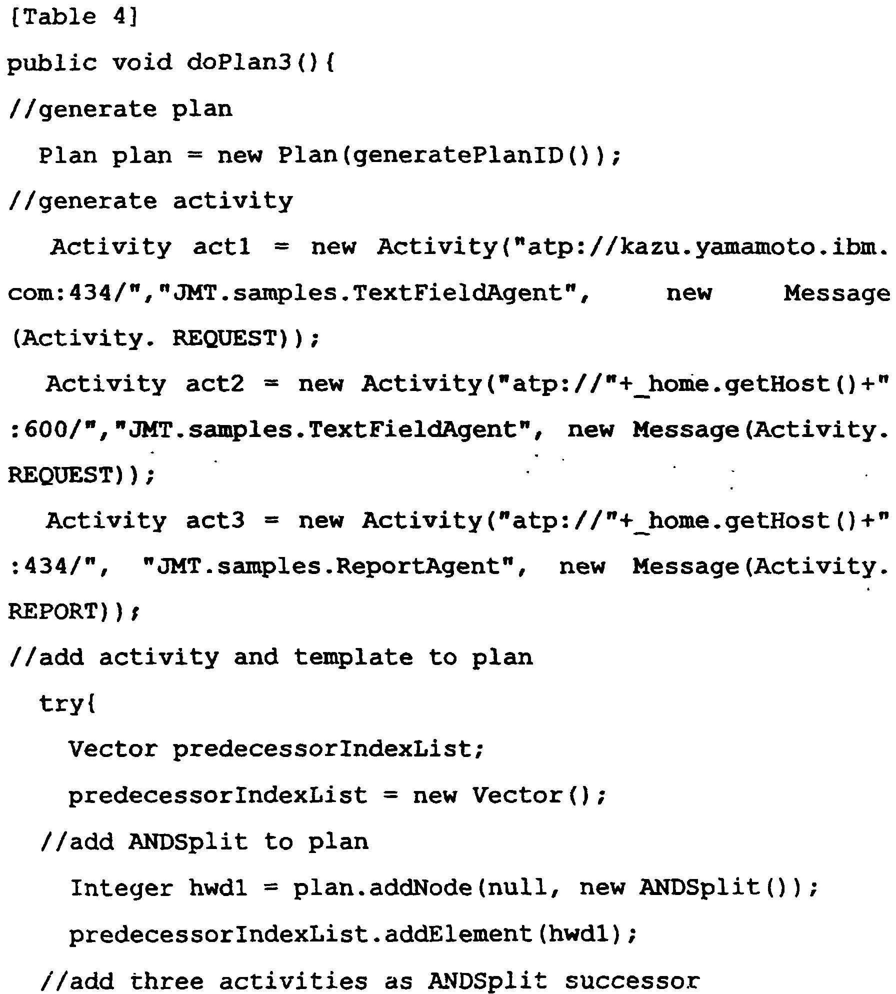

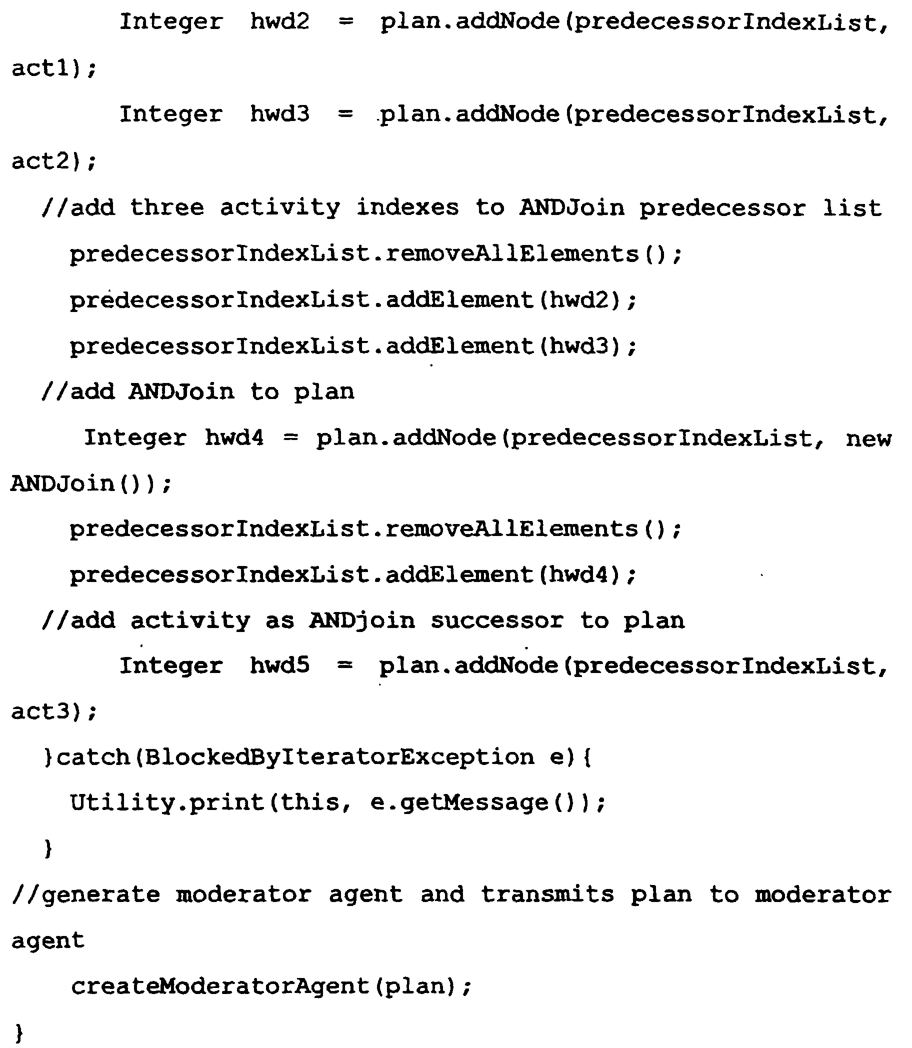

### D-4. Topology of case in which ORJoin template is included

An ORJoin template, as well as the ANDJoin template, has a plurality of predecessor activities and one successor activity. It should be noted, however, that for the ORJoin template one of the predecessor activities is selected and the others are discarded. This function is employed, for example, for processing whereby reservation conditions concerning a flight between Haneda and Sapporo are examined for several local airline companies, and a first airline company for which the reservation condition is obtained is employed. Table 5 shows a coding example for a planner agent for topology of a case in which the ORJoin template is included.

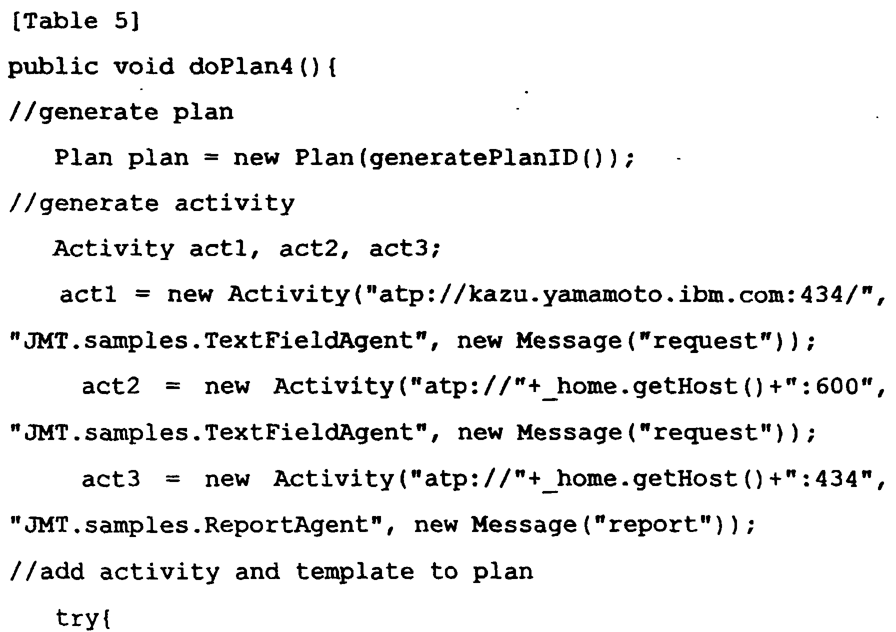

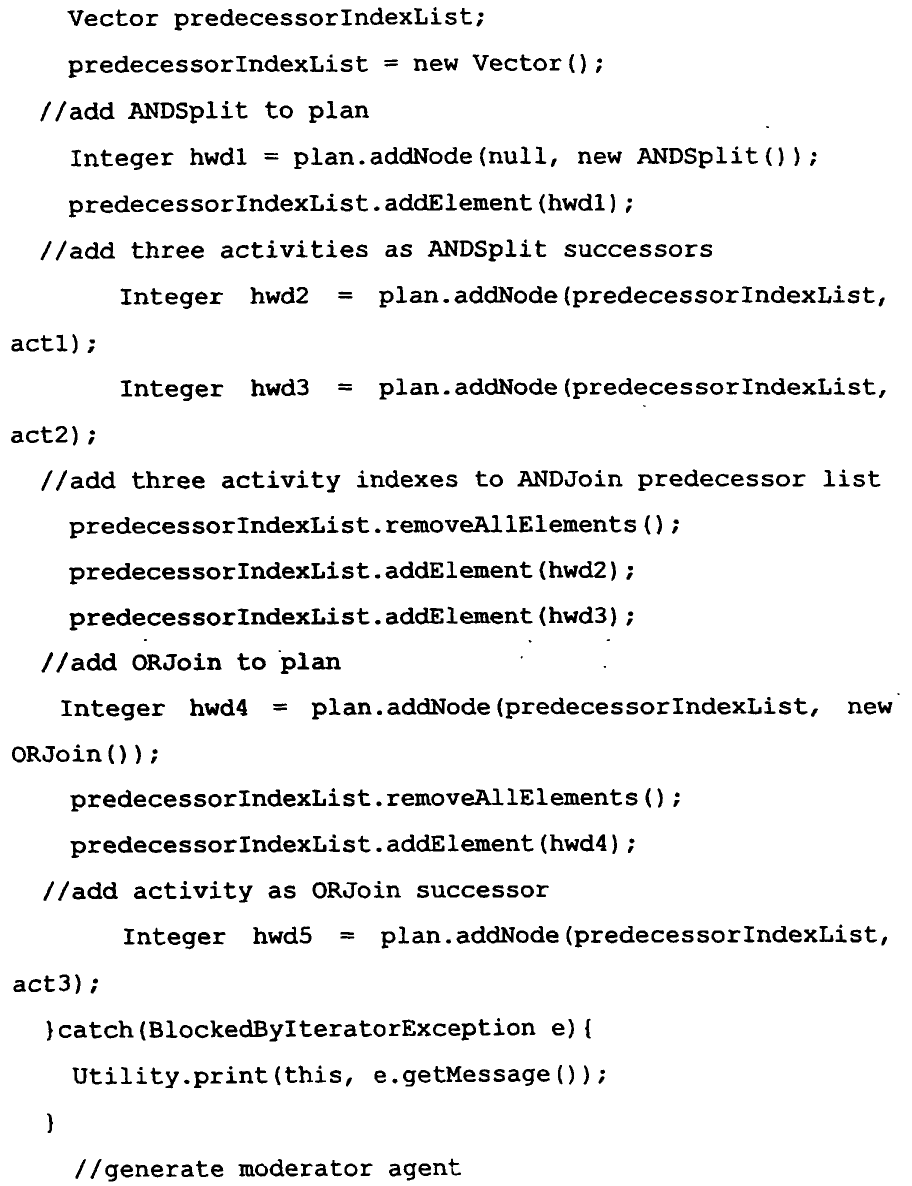

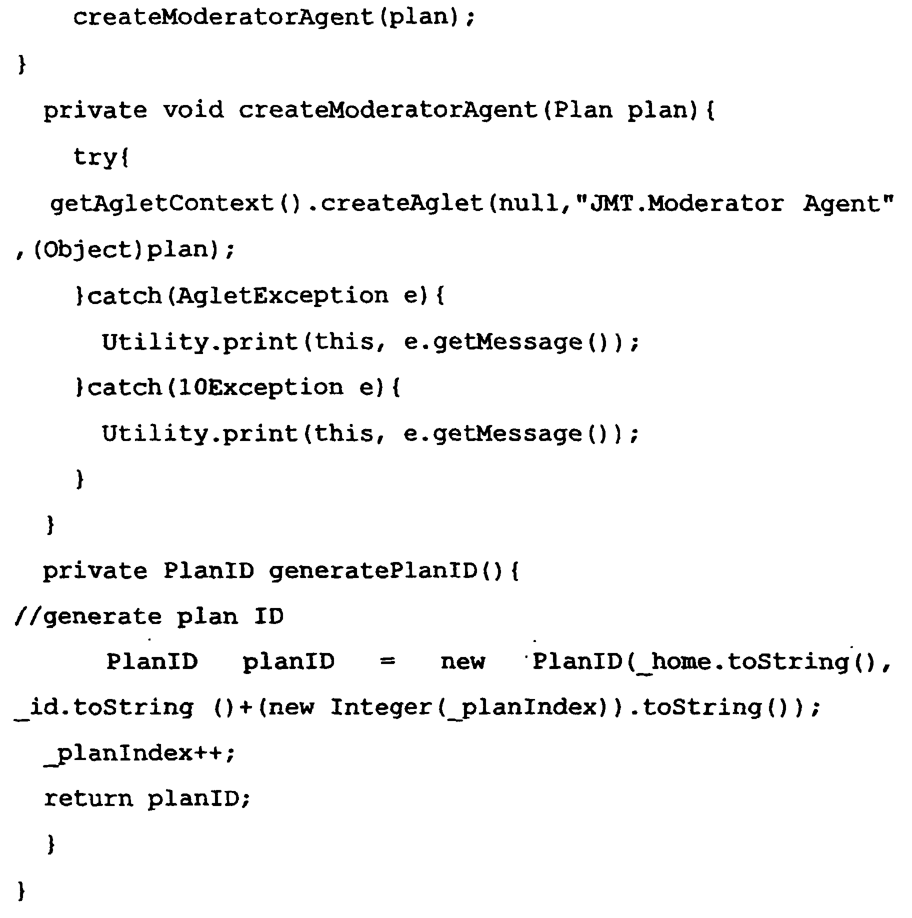

### E. Execution of plan

### E-1. Topology of case in which Chain template is included (Fig. 14)

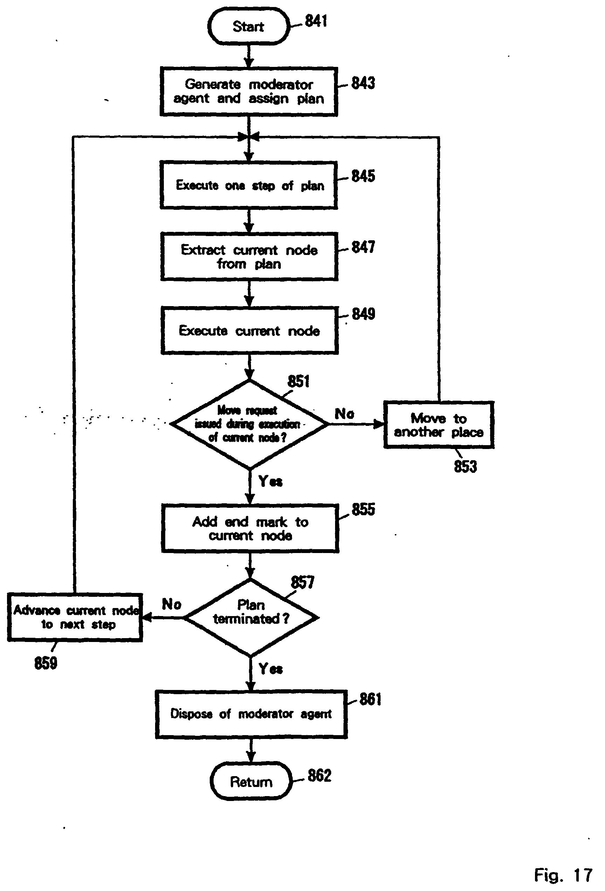

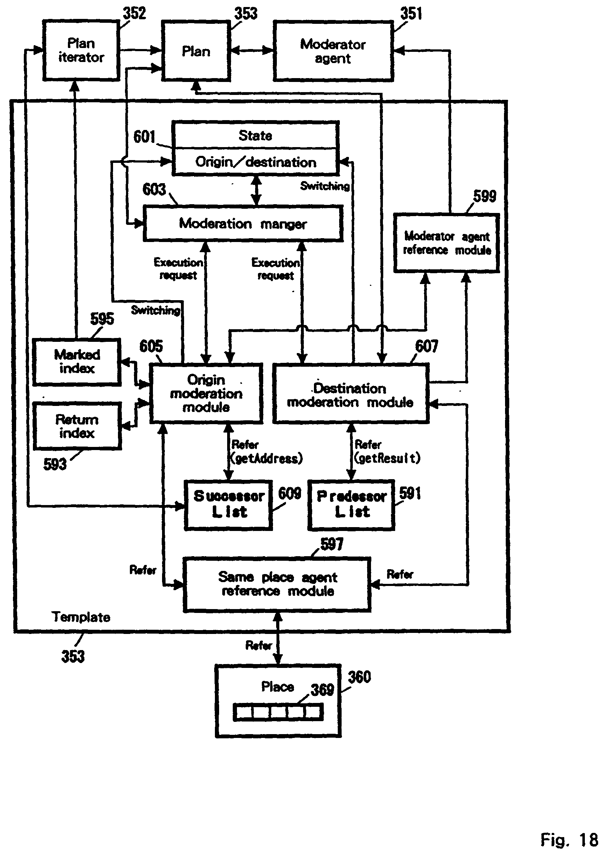

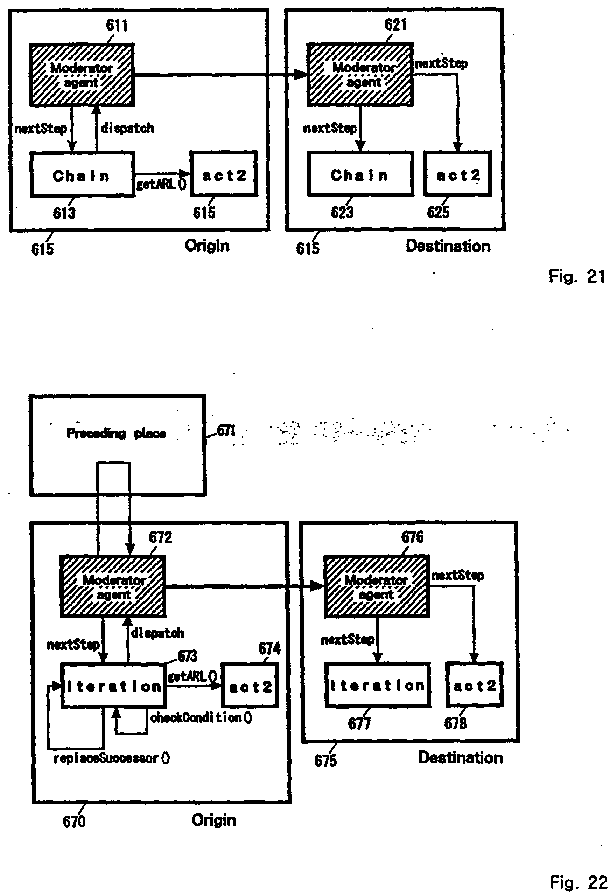

The operation of a mobile object group for topology of a case in which the Chain template is included will now be described while referring to Figs. 17 through 21. Fig. 17 is a flowchart showing the processing for the execution of a plan; and Fig. 18 is a functional block diagram illustrating a moderator template. Fig. 21 is a conceptual diagram illustrating the condition where a mobile object group moves from the origin to the destination. First, referring to Fig. 17, when a moderator agent 351 is generated and a plan object 353 is allocated for it (block 843), the moderator agent 351 automatically executes the plan (block 845).

Instruction "NextStep" is transmitted from the moderator agent 351 to the plan object 353, and in response to this, the plan object 353 first extracts a current plan node (block 847). In the preferred embodiment of the present invention, management of a step of a plan node wherein a plan iterator object 352 is located is effected, and in response to an inquiry from the plan object 353, information for the step of the current plan node wherein the plan iterator object 352 exists is provided.

When the plan iterator object 352 returns a "0" (first step) in response to the current inquiry, the plan object 353 extracts act1. Then, the plan object 353 asks an activity defined in act1 to execute a request that is managed by the activity (block 849).

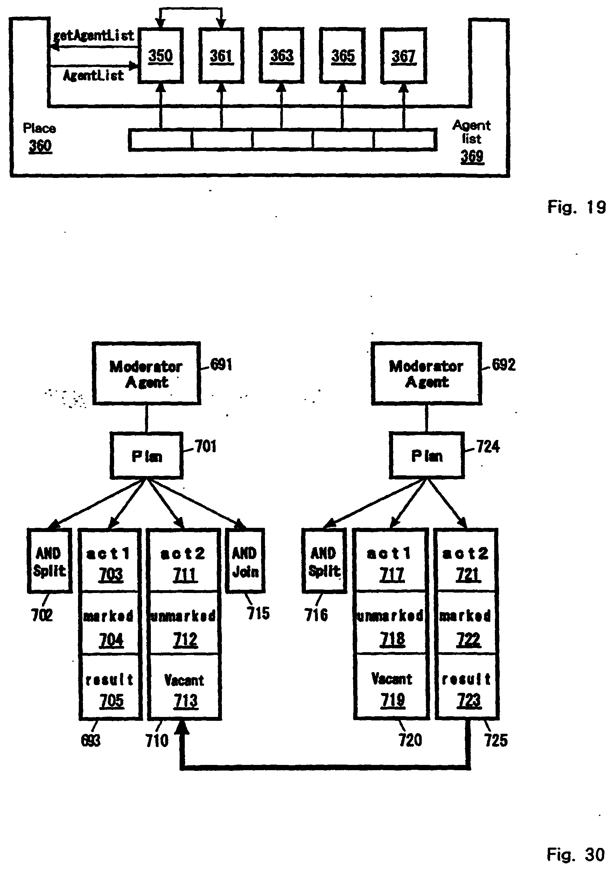

The activity determines whether or not the class name of an agent (agent name) internally held exists at the same place. As is shown in Fig. 19, when the moderator agent 351 reaches a place 360, it tells the place 360 its agent name, and the place 360 manages the agent name using an agent list 369. An agent that exists at the place 360 may query the place 360 by sending it a "getAgentList" instruction. Since the place 360 has a function for returning AgentList, the agent can ascertain which agents exist at the same place.

The activity transmits an internally held message (a request) to the agent (actor agent) 361 that is found. Upon receipt of the request, the actor agent 361 transmits a return object to an agent 350 that issued the request. The requesting agent stores the received object in a Result record 525 (Fig. 14).

The activity notifies the plan object 353 of the termination of the requested job, and in response to this, the plan object 353 adds, to act1, a mark indicating the processing is completed (block 855). The plan object 353 asks the plan iterator 352 to advance a step (block 859). The plan iterator 352 provides current information for the plan object 353.

Since the current information is a "1" (second step), the plan object 353 extracts a Chain template object (blocks 845 and 847). The plan object 353 requests that the Chain performs the execution (block 849).

A Chain moderation manager 603 asks a state manager 601 for a current state. Since by default the state of the state manager 601 is set to origin, it notifies the moderation manager 603 of this. When the moderation manager 603 acquires the state information from the state manager 601, it requests the state manager 601 to switch the states. In response to this, the state manager 601 changes its state from origin to destination.

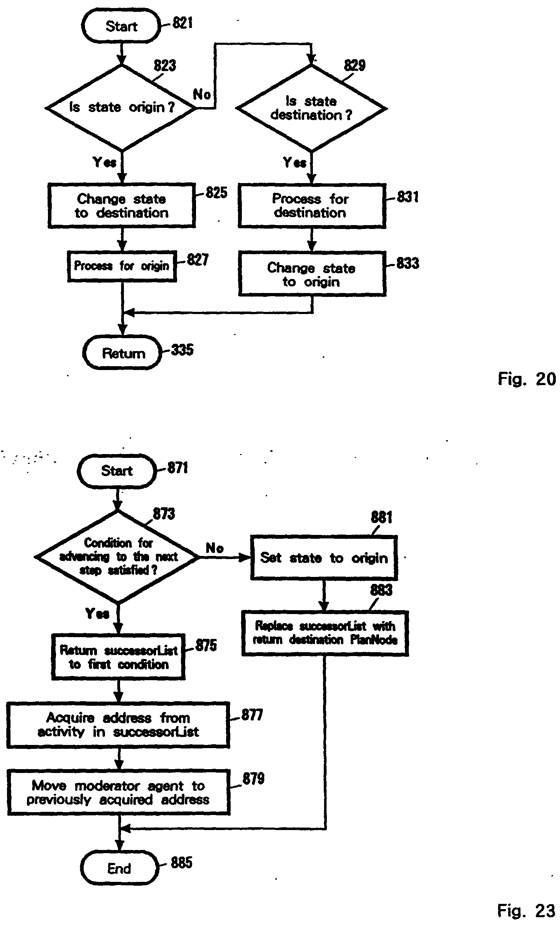

Fig. 20 is a flowchart showing the switching of the state performed by the Chain template and the processing at the origin or the destination. This flowchart shows an operation performed in common with a plurality of the types of templates that exist. The processing performed at the origin at block 827 and the processing performed at the destination at block 831 are varied, depending on the template type.

The moderation manager 603 asks an origin moderation module 605 to perform the processing. The origin moderation module 605 and a destination moderation module 607 manage a set of instructions used for operating a template at separate places.

The origin moderation module 605 queries a moderator agent reference module 599 to acquire an address for the place at which the moderator agent 351 is currently present.

Further, the origin moderation module 605 requests transmission by the successor list 609 of an address for an activity registered in the successor list 609. The successor list 609 acquires the address from a registered activity (act2), and transmits it to the origin moderation module 605.

The origin moderation module 605 compares the received activity address with the address of the place at which the moderator agent 351 currently exists. If the two addresses are different, the origin moderation module 605 moves the moderator agent 351 to the activity address. Specifically, the origin moderation module 605 transmits movement instruction via the moderator agent reference module 599. When the two addresses are the same, the processing is thereafter terminated.

At the place to which the moderator agent 351 is moved, the moderator agent 351 requests the plan object 353 to execute one step. In a like manner, the current plan node is extracted. The plan object 353 requests the Chain to execute the next step. The Chain acknowledges the state information and performs the processing for the destination. The state information is changed to the state for origin.

When the plan object 353 ascertains that the Chain has completed the destination process, the plan object 353 extracts the next current plan node (act2), and requests the act2 to execute an activity. The act2 acquires the result that the act1 holds internally.

In the preferred embodiment of the present invention, the destination module 607 refers to a predecessor list 591 and transmits instruction "getResult" to the Chain to request the transmission of the results. Upon receipt of the instruction, the Chain performs a search to determine whether it is holding Result. Since the Chain is not holding Result, the Chain refers to the predecessor list 591 and obtains Result from an object (act1) registered in the predecessor list 591. The Chain then transmits the Result to act2. If no object is registered in the predecessor list 591, the Chain transmits, to the act2, Dummy that indicates Result is not held. This process can be replaced with a process whereby a record for storing Result is prepared for the template.

The act2 employs the internally held agent class name as a key when referring to a report agent that exists at the same place. The act2 transmits an internally held message to the report agent by using as an argument the Result obtained from act1. The plan object 353 extracts the following current node. In this case, since there is no current node, the plan object 353 detects this, and the processing is thereafter terminated. The destination moderation module 607 transmits an instruction for disposing of the moderator agent 351 via the moderator agent reference module 599 to the moderator agent 351.

### E-2. Topology of case in which Iteration template is included (Fig. 15)

Fig. 22 is a diagram illustrating the outline of an operation for a mobile object group that is controlled by an Iteration template. The processing for topology of a case in which the Iteration template is included will now be described while referring to Fig. 18. Similar to the case involving the Chain, a moderator agent 351 is generated, and a plan object 353 is generated as an argument and is transmitted to the moderator agent 351 to enable the plan object 353 to execute each step. In addition, as well as for the case involving the Chain template, the plan object 353 extracts a current plan node (Chain), and the Chain executes the process at the origin. At the destination, the process for the destination and the activity of act1 are performed, as is previously described in "E-1. Topology of case in which Chain template is included."

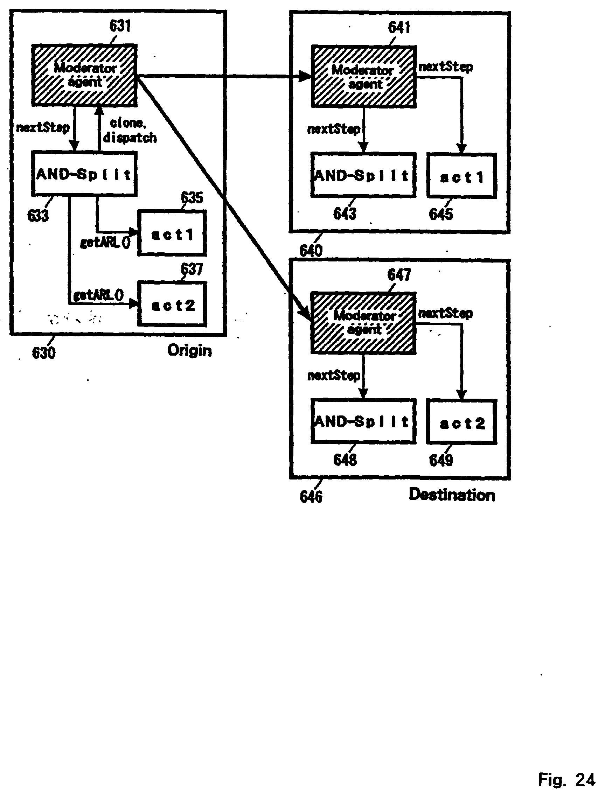

When the process for act1 has been completed, the plan object 353 requests the Iteration template to execute the next step. Fig. 23 is a flowchart showing the processing performed at the origin of the Iteration template. In the processing at the origin of the Iteration template, first, a check is performed to determine whether the process may advance to the next step, e.g., whether Result information for act1 matches a predetermined condition (block 873).

When the Result information matches the predetermined condition, successor information that is internally held is stored in the successor list (block 875). An address is extracted from the act2 in the successor list (block 877), and the moderator agent 351 is moved to the address (block 879). When the Result information does not match the predetermined condition, the state is set to the origin (block 881), a plan node is referred to by using a return node index and is used to replace the elements in the successor list (block 883). Program control then advances to the next step. Following this, the process for the act2 is performed as was described in "E-1. Topology of case in which Chain template is included," and the processing is thereafter terminated.

### E-3. Topology of case in which ANDSplit and ANDJoin templates are included (Fig. 16)

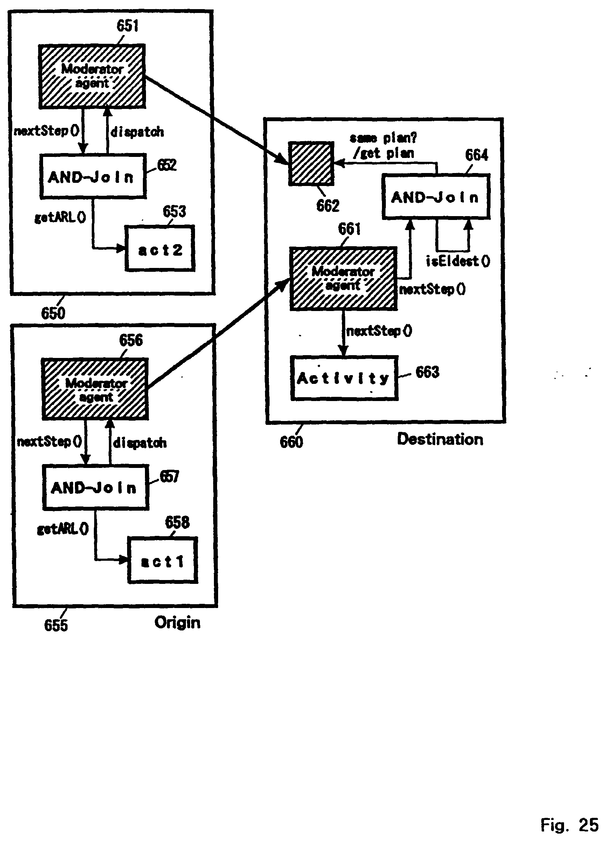

Figs. 24 and 25 are diagrams illustrating the outline of an operation of a mobile object group that is controlled by the ANDSplit and ANDJoin templates. The process for the case of topology of a case in which the ANDSplit and ANDJoin templates are included will now be described while referring to Fig. 18. As well as for the Chain template, a moderator agent 351 is generated, and a plan object 353 that is generated as an argument is transmitted to the moderator agent 351. The plan object 353 is executed at each step.

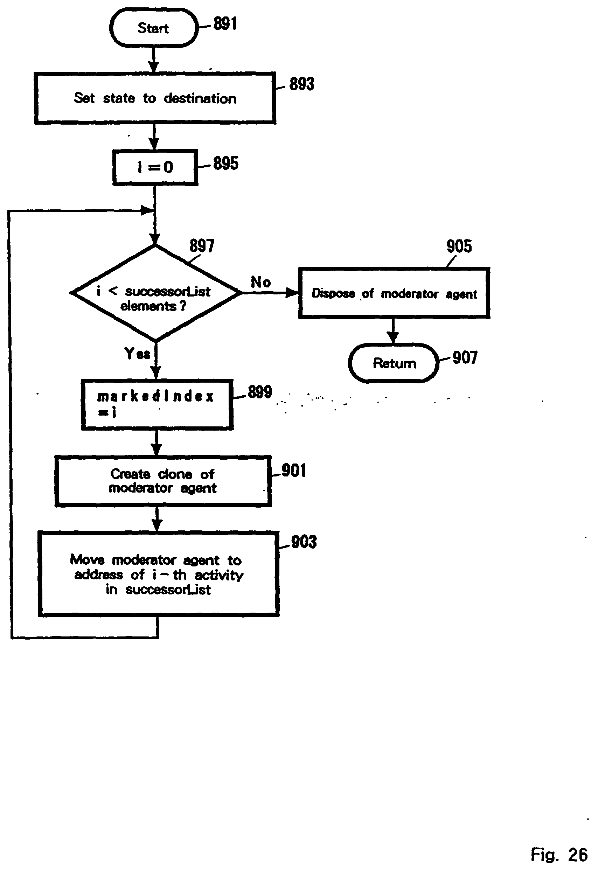

Similarly to the case for the Chain, the plan object 353 extracts ANDSplit, which is a current plan node. The plan object 353 requests the ANDSplit to execute the next step. Fig. 26 is a flowchart showing the process performed at an origin by the ANDSplit template.

A moderation manager 603 examines state information in a state manager 601 and acquires "origin" information. The moderation manager 603 requests an origin moderation module 605 to perform the processing at the origin. The moderation manager 603 requests the state manager 601 to change the state to the destination (block 893). The ANDSplit refers to the successor list (block 897), extracts the first activity from the successor list and sets "0" in a marked index 595 (block 899).

Following this, the moderation manager 603 asks the moderator agent 351, through the moderator agent reference module 599, to prepare a clone of the moderator agent 351 (block 901). In response to this, the moderator agent 351 generates not only a clone of the moderator agent 351 but also copies of all of the objects, such as the plan, the template and the activity, that are held in the moderator agent 351.

In response to the completion of the clone generation, the clone moderator agent that is thus generated reports its agent ID to the moderator agent reference module 599. The moderator agent reference module 599 notifies the origin moderation module 605 of the completion of the preparation of clones.

In response to this, the origin moderation module 605 acquires, from the successor list 609, an address for an activity (act1) corresponding to a marked index value (0). Through the moderator agent reference module 599, the origin moderation module 605 requests the moderator agent 351 to move the clone to the address for act1 (block 903).

The origin moderation module 605 refers to the successor list 609 to determine whether or not the next activity is registered. When the next activity is registered, the process for preparing another clone is performed in the same manner, and the clone is moved to the place for act2 (blocks 897 through 903). At this time, the marked index 595 of the clone to be moved to act2 should differ from that of the clone to be moved to act1, and is set to "1" (block 899).

When another clone has been prepared and moved to act2, the origin moderation module 605 refers to the successor list 609 to determine whether or not the following activity is registered (block 897). In this case, since an activity no longer exists in the successor list 609, the origin moderation module 605 ascertains that the preparation and move of the clone have been terminated.

Through the moderator agent reference module 599, the origin moderation module 605 transmits to the moderator agent 351 an instruction to dispose of the moderator agent 351 that remains at the origin (block 905).

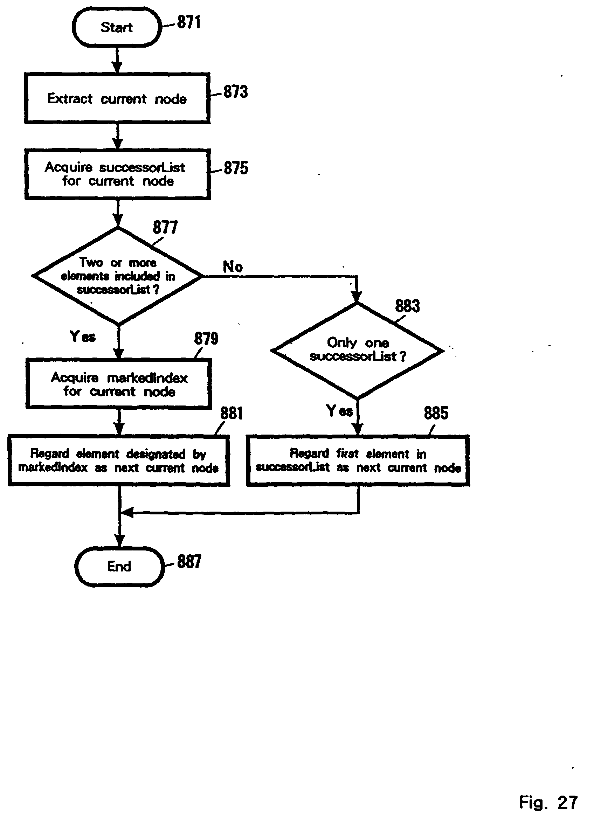

The clone moderator agent executes the next plan step in the separate places. At this time, the ANDSplit template is again extracted as a current node. The flowchart for the logic to determine the next current node is shown in Fig. 27. The moderation manager 603 refers to the state manager 601 to acquire state information, ascertains that the current state is a destination, and asks the destination moderation module 607 to execute the processing.

The moderation manager 603 returns the state information to the origin condition. When the plan object 353 ascertains that the destination process has been performed by the ANDSplit, the moderation manger 603 extracts a plan node (act1 or act2) corresponding to a marked index, and requests the plan node to execute the activity.

The plan object 353 refers to the plan iterator 352 to extract the next current node. At this time, the plan iterator 352 refers to the successor list 609 and the marked index 595 to examine a registered value (Fig. 27).

The act1 and act2 acquire the Result held by the activity that was previously executed. In this example, since no activity is executed prior to the ANDSplit template, the act1 and act2 do not acquire the Result held by the activity that was previously executed.

First, a clone agent that corresponds to act1 selects the ANDJoin as the next current node. The plan object 353 asks the moderation manager 603 in the ANDJoin template to execute the next step. The moderation manger 603 examines the information in the state manager 601 to ascertain whether the process at the current origin should be performed, and transmits an execution request to the origin moderation module 605. In addition, the moderation manager 603 requests the state manager 601 to alter the state.

The origin moderation module 605 refers to the successor list 609 and acquires address information for an activity (act3) registered in the successor list 609. Via the moderator agent reference module 599, the origin moderation module 605 instructs the moderator agent 351 to move to a place that corresponds to the obtained address information.

A clone agent corresponding to act2 performs the processing in the same manner as for act1, and moves to the place for act3. Since the two moderator agents have arrived at a new place, they execute the next steps. The plan object 353 extracts the ANDJoin template as a current node and executes the next step.

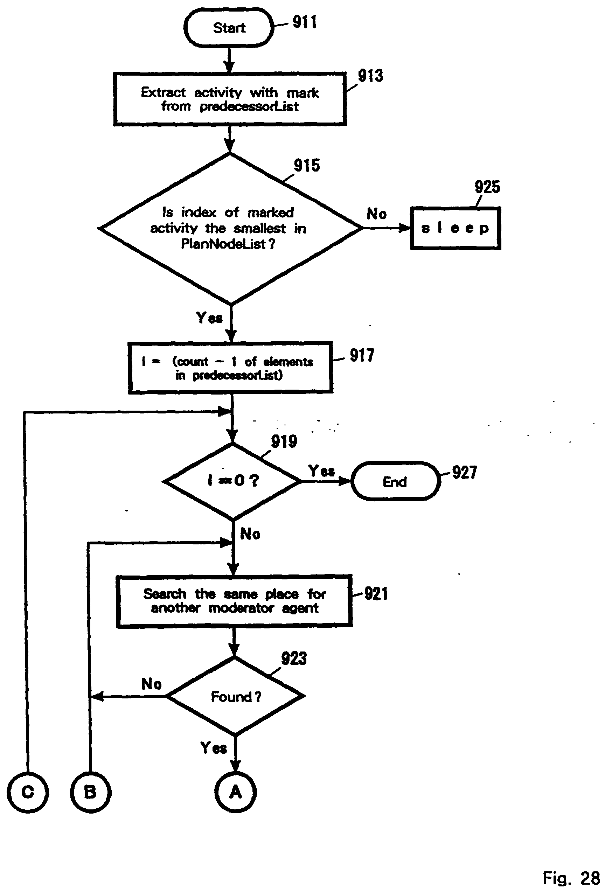

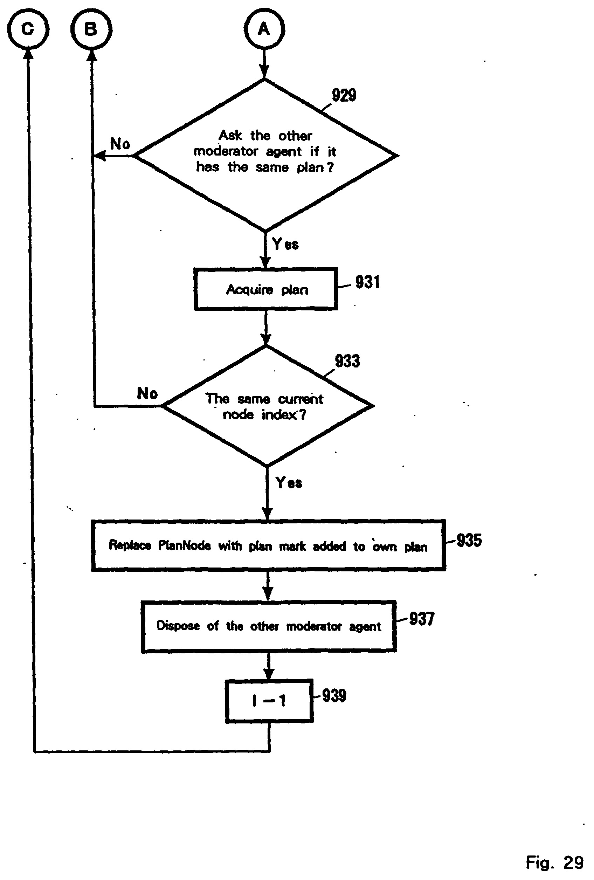

Figs. 28 and 29 are flowcharts showing the processing performed at the destination for the ANDJoin template. The ANDJoin moderation manager 603 refers to the state manager 601, determines that the current state is a destination, and requests the destination moderation module 607 to perform the execution.

Each moderation manger 603 returns the state to the origin condition. The destination moderation module 607 of the clone that corresponds to act1 refers to the predecessor list 591 and extracts an activity (act1 in this case) for which an end mark is provided (block 913). A check is performed to determine whether or not the extracted activity has the smallest index in the predecessor index list (block 915). When the activity has the smallest index, the process for receiving the Result of another clone agent is performed.

More specifically, the destination moderation module 607 asks the agent reference module 597 at the same place to acquire from the place an agent list that exists there. In response to this, the agent reference module 597 at the same place queries the place 360 by transmitting to it a "getAgentList" instruction. The place 360 returns the AgentList to the agent reference module 597, so that a list of agents existing at the same place can be ascertained.

The agent reference module 597 at the same place then transmits this list to the destination moderation module 607, and the destination moderation module 607 searches the list for an agent having the same plan ID (block 921).

When an agent having the same plan ID is found, the plan for that agent is acquired. A current node of the acquired plan is examined (block 929). If the current node is the same ANDJoin, the process for receiving the Result of the agent is performed. In the preferred embodiment of the present invention, a further check is performed to determine whether or not the current node index is the same (blocks 931 and 933). Only when the current node index is the same, is a fusion process begun. This process is performed in order to prevent a processing target for the ANDJoin from being misunderstood. At this time, the destination moderation module 607 refers to the predecessor list to ascertain the number of predecessors, and performs a process for receiving the Result in accordance with the number of the predecessors.

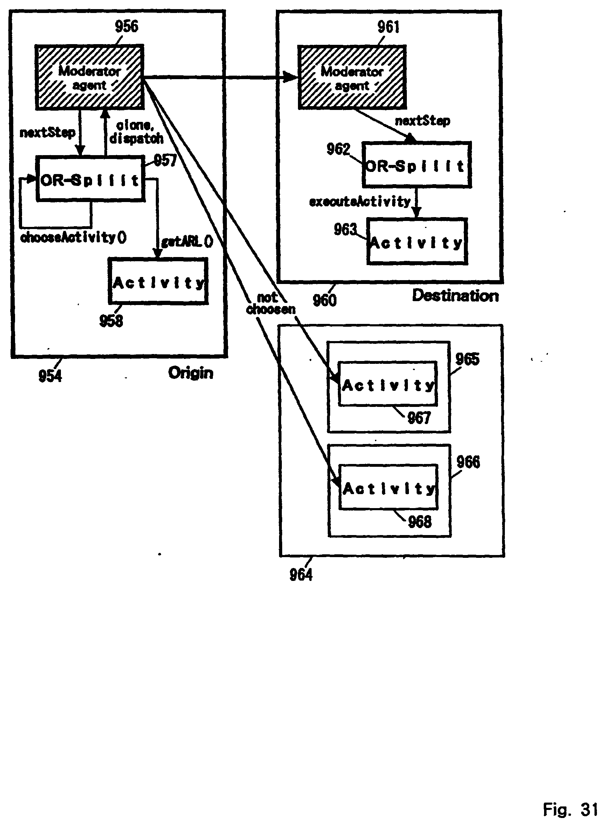

More specifically, the destination moderation module 607 refers to the predecessor list 591 of the received plan, extracts an activity to which an end mark is added, and receives the Result that the activity holds. This Result is set to the Result of a corresponding activity. A process for replacing the plan node may be performed (block 935). Fig. 30 is a diagram illustrating the outline of the process for receiving the Result.

The destination moderation agent 607 detects that the Result has been set, and transmits a disposal instruction to the moderator agent 351 via the moderator agent reference module 599 (block 937). Upon receipt of this instruction, the moderator agent 351 disposes of the moderator agent itself and the objects (a plan, a template, an activity, etc.) that it manages.

On the other hand, the agent that corresponds to act2 executes the next step as soon as it has arrived at a new place. The destination moderation module 607 for the agent also refers to the predecessor list 591 and extracts an activity (act2 in this case) to which an end mark is added (block 913). A check is performed to determine whether or not the extracted activity has the smallest index in the predecessor index list (block 915). When the activity does not have the smallest index, program control enters the Sleep state to wait for the transmission of the Result of another clone agent (block 925).

Referring back to the clone corresponding to act1, the destination moderation module 607 receives the Result in accordance with the count for the predecessor list (the number of elements in the predecessor list; one in this case). After the process for disposing of the clone is completed, the plan object 353 extracts the next current plan node (act3), and requests act3 to execute an activity.

The act3 obtains the Results that are internally held by the act1 and act2. In the preferred embodiment of the present invention, the destination moderation module 607 refers to the predecessor list 591, and transmits, to the clone act1 and act2, a "getResult" instruction to request the transmission of the processing result. In response to the instruction, act1 and act2 output their Results.

The act3 employs, as a key, the class name of an internally held agent to refer to agents (report agents in this case) that exist at the same place. The act3 transmits an internally held message to the report agent by using, as arguments, the Results obtained from the act1 and act2.

The plan object 353 extracts the next current node. In this case, since no current node is present, the plan object 353 detects this and terminates the processing. The moderator agent 351 detects the termination of the processing and disposes of the moderator agent and the objects that it manages. The processing is thereafter terminated.

### E-4. Topology of case in which ORSplit template is included

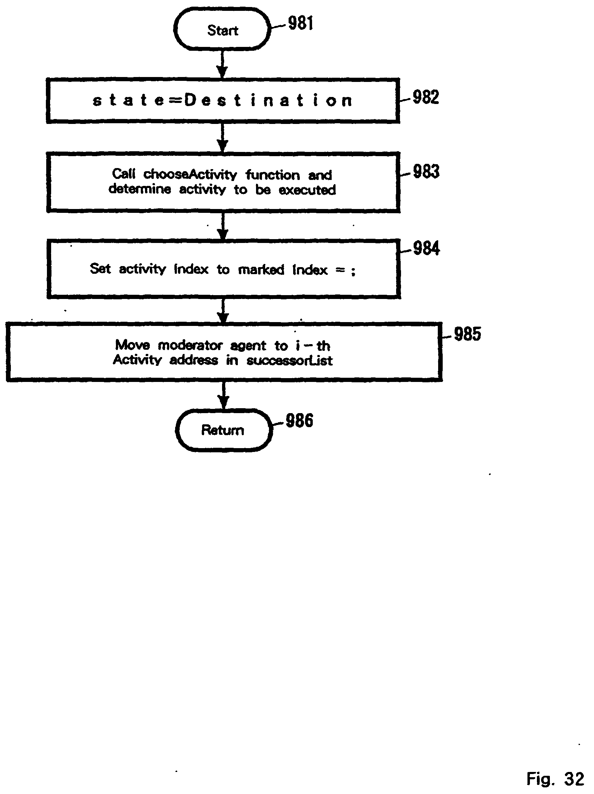

Fig. 31 is a diagram illustrating the outline of an operation of a mobile object group controlled by an ORSplit template. The ORSplit template differs from the Chain and ANDSplit templates in that it performs the processing shown in Fig. 32 as the process for the origin. The ORSplit template has one predecessor activity and a plurality of successor activities. At the original place, one activity is selected from the successor list by calling a method "chooseActivity," and only the selected activity is executed.

In the processing for the ORSplit origin, first, the state is changed to the destination (block 982). The function "chooseActivity" is called and an activity is selected that matches a predetermined condition (block 983). The index for the activity is regarded as a marked index (block 984). The address for the selected activity is obtained, and the moderator agent 351 is requested to move to the address (block 985).

### E-5. Topology of case in which ORJoin template is included

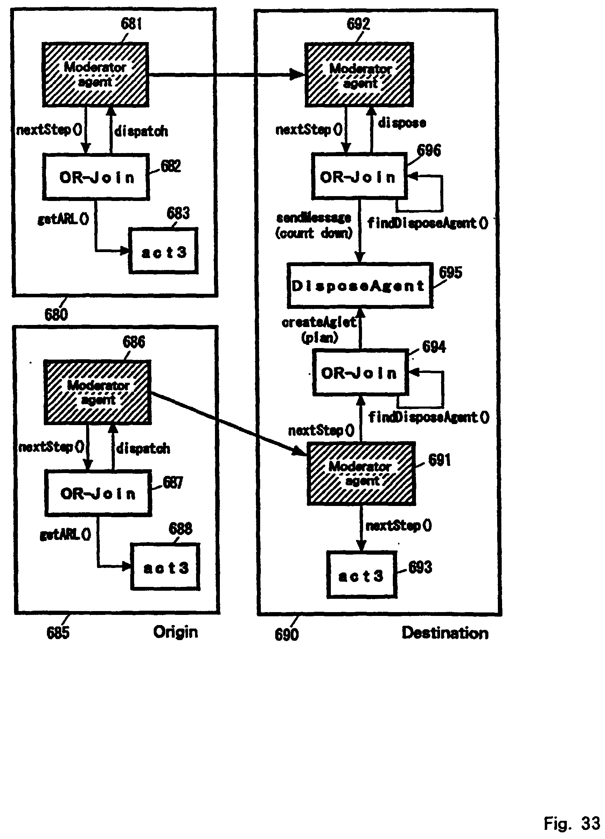

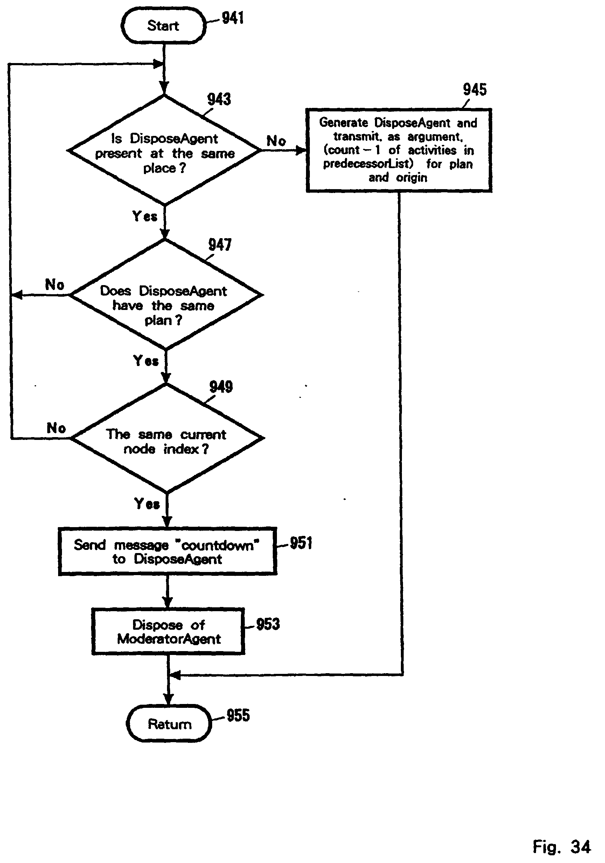

Fig. 33 is a diagram illustrating the outline of an operation by a mobile object group controlled by an ORJoin template. The ORJoin differs from the Chain and the ANDJoin templates in that it performs the processing shown in Fig. 34 as a process for a destination. The ORJoin template has a plurality of predecessor activities and one successor activity. The first mobile agent that arrives at the destination generates a Dispose agent and disposes of other mobile agents.

First, an ORJoin template 694, for a first mobile object group that arrives at a destination 690, transmits the method "findDisposeAgent," and determines whether or not a Dispose agent is present at the same place (block 943). When no Dispose agent is present, a Dispose agent for disposing of other agents is generated (block 945). At this time, the plan and the count - 1 of the activities in the predecessor list are transmitted as arguments. The Dispose agent waits for a mobile object group having the count - 1 of the activities in the predecessor list, and disposes of that group. When the object group has been disposed of, the Dispose agent disposes of itself. In the preferred embodiment of the present invention, whether or not the agent arrived first at the destination 690 is employed as the condition for selecting a survivor. However, an agent that continues the processing may be determined by employing the contents of the Result as the condition.

An ORJoin template 696 of another mobile object group also transmits the method "findDisposeAgent," and determines whether or not a Dispose agent is present at the same place (block 943). In this case, since the Dispose agent is already present, a process for disposing of the Dispose agent is begun. More specifically, a check is performed to determine whether the Dispose agent has the same plan (block 947) or whether the current node index is the same (block 949). As a result, the Dispose agent ascertains that the Dispose agent itself should be disposed of.

When it is ascertained that the Dispose agent itself should be disposed of, the message "countdown" is transmitted to the Dispose agent to reduce the number of processes it performs (block 951). Then, the ORJoin template 696 transmits a request to the moderator agent 692 to dispose of the moderator agent 692.

In the preferred embodiment of the present invention, a partial Join template and others are also provided that have a plurality of predecessor activities and a plurality of successor activities that are fewer in number than the predecessor activities. Since these templates can be implemented by a combination of the above described templates, no explanation for them will be given. The partial Join template can be implemented, for example, by a combination of the ORJoin template, which links a plurality of predecessor activities with one successor activity; an activity for determining that a desired number of ORJoin templates are executed; the Iteration template, which returns to the ORJoin template in accordance with a determination as to whether that activity cleared a predetermined condition; a dummy activity; and the ANDSplit template for splitting the activity into a desired number of segments.

As is described above, according to the present invention, it is possible to reduce to the minimum the employment of other resources during execution of a mobile agent.

Further, according to the present invention, it is possible to reduce, through efficient processing, the processing time required before results are returned, since a mobile agent is emitted by a user.

In addition, according to the present invention, it is possible to develop a mobile agent while high level programming knowledge is not required, and the effort and the time required for developing a program is reduced.

Furthermore, according to the present invention, provided is a user-friendly mobile agent development program the functioning of which a developer can understand intuitively.

## Claims

1. An object, said object being a member of a mobile object group, said group being operable to move from a first place to a second place under the control of a moderator agent and to execute a first activity at said first place and a second activity at said second place, said object comprising:
(a) a predecessor list having link information relative to said first activity;
(b) a successor list having link information relative to said second activity; and
(c) a moderation module for requiring said moderator agent to move from said first place to said second place.

2. An object, said object being a member of a mobile object group, said group being operable to move from a first place to a second place under the control of a moderator agent and to execute a first activity at said first place and a second activity at said second place, said object comprising:
(a) a predecessor list having link information relative to said first activity;
(b) a successor list having link information relative to said second activity;
(c) a state manager for determining whether said moderation module exists at said first place or at said second place; and
(d) a moderation module for requiring said moderator agent to move from said first place to said second place.

3. A mobile object group, said group being operable to move from a first place to a second place under the control of a moderator agent and to execute a first activity at said first place and a second activity at said second place, said object comprising:
(a) a moderator template including
(a-1) a predecessor list having link information relative to said first activity,
(a-2) a successor list having link information relative to said second activity,
(a-3) a state manager for determining whether said moderation module exists in said first place or in said second place, and
(a-4) a moderation module for requiring said moderator agent to move said mobile object group from said first place to said second place;
(b) a plan iterator for determining for which of said first activity, said second activity and said moderator template authority for execution currently exists; and
(c) a plan object for managing turns of said first activity, said second activity and said moderator template for the execution.

4. A method for controlling a mobile object group, said group being operable to move to a first place specified by a first address and to a second place specified by a second address under the control of a moderator agent, and to execute a first activity at said first place and a second activity at said second place, said method comprising the steps of:
(a) requesting said moderator agent to prepare a first mobile moderator agent having link information relative to said first activity and a second mobile moderator agent having link information relative to said second activity;
(b) obtaining said first address;
(c) obtaining said second address;
(d) requesting that said first mobile moderator agent move to said first place; and
(e) requesting that said second mobile moderator agent move to said second place.

5. A method for controlling a mobile object group, said group being operable to move to a first place specified by a first address, to a second place specified by a second address and to a third place specified by a third address under the control of a moderator agent, and to execute a first activity at said first place, a second activity at said second place and a third activity at said third place, said method comprising the steps of:
(a) requesting that said mobile moderator agent at said first place prepare a first mobile moderator agent having link information relative to said second activity and a second mobile moderator agent having link information relative to said third activity;
(b) obtaining said second address;
(c) obtaining said third address;
(d) requesting that said first mobile moderator agent move from said first place to said second place;
(e) requesting that said second mobile moderator agent move from said first place to said third place;
(f) requesting execution of said second activity at said second place; and
(g) requesting execution of said third activity at said third place.

6. A method for controlling a mobile object group, said group being operable to move to a plurality of places under the control of a moderator agent and to execute an appropriate activity at each of said places, said method comprising the steps of:
(a) executing, at a first place, a first activity linked with a first mobile moderator agent to acquire first processing results;
(b) requesting that said first mobile moderator agent, which exists in said first place and which holds said first processing results, move to a second place;
(c) executing, at a third place, a second activity linked with a second mobile moderator agent to acquire second processing results;
(d) requesting that said second mobile moderator agent, which exists in said third place and which holds said second processing results, move to said second place;
(e) requesting that said second mobile moderator agent at said second place transmit said second processing results to said first mobile moderator agent; and
(f) said first mobile moderator agent at said second place holding both said first and said second processing results.

7. A method for controlling a mobile object group, said group being operable to move to a plurality of places under the control of a moderator agent and to execute an appropriate activity at each of said places, said method comprising the steps of:
(a) executing, at a first place, a first activity linked with a first mobile moderator agent having agent identification information and acquiring first processing results;
(b) requesting that said first mobile moderator agent, which exists in said first place and which holds said first processing results, move to a second place;
(c) executing, at a third place, a second activity linked with a second mobile moderator agent having the same agent identification information as that of said first mobile moderator agent and acquiring second processing results;
(d) requesting that said second mobile moderator agent, which exists in said third place and which holds said second processing results, move to said second place;
(e) requesting that said second mobile moderator agent at said second place transmit said second processing results to said first mobile moderator agent;
(f) searching said second place for a mobile moderator agent having the same identification information as said agent identification information; and
(g) said first mobile moderator agent at said second place holding both said first and said second processing results.

8. A mobile object group, said group being operable to move from a first place to a second place and to execute a first activity at said first place and a second activity at said second place, said mobile object group comprising:
(a) a plan object for managing turns of said first activity and said second activity for the execution; and
(b) a plan iterator for determining for which of said first activity and said second activity authority for execution currently exists.

9. A method for generating a mobile object group, said group including (i) a first activity to be executed at a first place, (ii) a second activity to be executed at a second place, and (iii) a moderator template for requiring a moderator agent to move to said second place, said moderator agent being operable to control the movement of said mobile group at said first place, said method comprising the steps of:
(a) generating, during said first activity, a successor list containing link information related to said moderator template;
(b) generating, by means of said moderator template, a predecessor list containing link information related to said first activity and a successor list containing link information related to said second activity; and
(c) generating, during said second activity, a predecessor list containing link information related to said moderator template.

10. A method for generating a mobile object group, said group including (i) a first activity to be executed at a first place, (ii) a second activity to be executed at a second place, and (iii) a moderator template for requiring a moderator agent to move to said second place, said moderator agent being operable to control the movement of said mobile group at said first place, said method comprising the steps of:
(a) generating a list for managing turns of said first activity, said moderator template and said second activity for the execution;
(b) generating, during said first activity, a successor list containing link information related to said moderator template;
(c) generating, by means of said moderator template, a predecessor list containing link information related to said first activity and a successor list containing link information related to said second activity; and
(d) generating, during said second activity, a predecessor list containing link information related to said moderator template.

11. An apparatus for generating a mobile object group, said group including (i) a first activity to be executed at a first place, (ii) a second activity to be executed at a second place, and (iii) a moderator template for requiring a moderator agent to move to said second place, said moderator agent being operable to control the movement of said mobile group at said first place, said apparatus comprising:
(a) means for generating, during said first activity, a successor list containing link information related to said moderator template;
(b) means for generating, by means of said moderator template, a predecessor list containing link information related to said first activity and a successor list containing link information related to said second activity; and
(c) means for generating, during said second activity, a predecessor list containing link information related to said moderator template.

12. A computer-readable memory medium storing a program for generating a mobile object group, said group including
(i) a first activity to be executed at a first place, (ii) a second activity to be executed at a second place, and
(iii) a moderator template for requiring a moderator agent to move to said second place, said moderator agent being operable to control the movement of said mobile group at said first place, said program comprising:
(a) program code for instructing said computer to generate, during said first activity, a successor list containing link information related to said moderator template;
(b) program code for instructing said computer to generate, by means of said moderator template, a predecessor list containing link information related to said first activity and a successor list containing link information related to said second activity; and
(c) program code for instructing said computer to generate, during said second activity, a predecessor list containing link information related to said moderator template.

## Amended claims

### Amended claims in accordance with Rule 86(2) EPC.

1. (Amend) A memory medium storing an object being a member of a mobile object group, said group being operable to move from a first place to a second place under the control of a moderator agent and to execute a first activity at said first place and a second activity at said second place, said memory medium storing:
(a) a predecessor list having link information relative to said first activity;
(b) a successor list having link information relative to said second activity; and
(c) a moderation module for requiring said moderator agent to move from said first place to said second place.
2. (Amend) A memory medium storing an object being a member of a mobile object group, said group being operable to move from a first place to a second place under the control of a moderator agent and to execute a first activity at said first place and a second activity at said second place, said memory medium storing:
(a) a predecessor list having link information relative to said first activity;
(b) a successor list having link information relative to said second activity;
(c) a state manager for determining whether said moderation module exists at said first place or at said second place; and
(d) a moderation module for requiring said moderator agent to move from said first place to said second place.
3. (Amend) A memory medium storing an object group, said group being operable to move from a first place to a second place under the control of a moderator agent and to execute a first activity at said first place and a second activity at said second place, said memory medium storing:
(a) a moderator template including
(a-1) a predecessor list having link information relative to said first activity,
(a-2) a successor list having link information relative to said second activity,
(a-3) a state manager for determining whether said moderation module exists in said first place or in said second place, and
(a-4) a moderation module for requiring said moderator agent to move said mobile object group from said first place to said second place;
(b) a plan iterator for determining for which of said first activity, said second activity and said moderator template authority for execution currently exists; and
(c) a plan object for managing turns of said first activity, said second activity and said moderator template for the execution.
4. A method for controlling a mobile object group, said group being operable to move to a first place specified by a first address and to a second place specified by a second address under the control of a moderator agent, and to execute a first activity at said first place and a second activity at said second place, said method comprising the steps of:
(a) requesting said moderator agent to prepare a first mobile moderator agent having link information relative to said first activity and a second mobile moderator agent having link information relative to said second activity;
(b) obtaining said first address;
(c) obtaining said second address;
(d) requesting that said first mobile moderator agent move to said first place; and
(e) requesting that said second mobile moderator agent move to said second place.
5. A method for controlling a mobile object group, said group being operable to move to a first place specified by a first address, to a second place specified by a second address and to a third place specified by a third address under the control of a moderator agent, and to execute a first activity at said first place, a second activity at said second place and a third activity at said third place, said method comprising the steps of:
(a) requesting that said mobile moderator agent at said first place prepare a first mobile moderator agent having link information relative to said second activity and a second mobile moderator agent having link information relative to said third activity;
(b) obtaining said second address;
(c) obtaining said third address;
(d) requesting that said first mobile moderator agent move from said first place to said second place;
(e) requesting that said second mobile moderator agent move from said first place to said third place;
(f) requesting execution of said second activity at said second place; and
(g) requesting execution of said third activity at said third place.
6. A method for controlling a mobile object group, said group being operable to move to a plurality of places under the control of a moderator agent and to execute an appropriate activity at each of said places, said method comprising the steps of:
(a) executing, at a first place, a first activity linked with a first mobile moderator agent to acquire first processing results;
(b) requesting that said first mobile moderator agent, which exists in said first place and which holds said first processing results, move to a second place;
(c) executing, at a third place, a second activity linked with a second mobile moderator agent to acquire second processing results;
(d) requesting that said second mobile moderator agent, which exists in said third place and which holds said second processing results, move to said second place;
(e) requesting that said second mobile moderator agent at said second place transmit said second processing results to said first mobile moderator agent; and
(f) said first mobile moderator agent at said second place holding both said first and said second processing results.
7. A method for controlling a mobile object group, said group being operable to move to a plurality of places under the control of a moderator agent and to execute an appropriate activity at each of said places, said method comprising the steps of:
(a) executing, at a first place, a first activity linked with a first mobile moderator agent having agent identification information and acquiring first processing results;
(b) requesting that said first mobile moderator agent, which exists in said first place and which holds said first processing results, move to a second place;
(c) executing, at a third place, a second activity linked with a second mobile moderator agent having the same agent identification information as that of said first mobile moderator agent and acquiring second processing results;
(d) requesting that said second mobile moderator agent, which exists in said third place and which holds said second processing results, move to said second place;
(e) requesting that said second mobile moderator agent at said second place transmit said second processing results to said first mobile moderator agent;
(f) searching said second place for a mobile moderator agent having the same identification information as said agent identification information; and
(g) said first mobile moderator agent at said second place holding both said first and said second processing results.
8. A mobile object group, said group being operable to move from a first place to a second place and to execute a first activity at said first place and a second activity at said second place, said mobile object group comprising:
(a) a plan object for managing turns of said first activity and said second activity for the execution; and
(b) a plan iterator for determining for which of said first activity and said second activity authority for execution currently exists.
9. A method for generating a mobile object group, said group including a first activity to be executed at a first place, a second activity to be executed at a second place, and a moderator template for requiring a moderator agent to move to said second place, said moderator agent being operable to control the movement of said mobile group at said first place, said method comprising the steps of:
(a) generating, during said first activity, a successor list containing link information related to said moderator template;
(b) generating, by means of said moderator template, a predecessor list containing link information related to said first activity and a successor list containing link information related to said second activity; and
(c) generating, during said second activity, a predecessor list containing link information related to said moderator template.
10. A method for generating a mobile object group, said group including a first activity to be executed at a first place, a second activity to be executed at a second place, and a moderator template for requiring a moderator agent to move to said second place, said moderator agent being operable to control the movement of said mobile group at said first place, said method comprising the steps of:
(a) generating a list for managing turns of said first activity, said moderator template and said second activity for the execution;
(b) generating, during said first activity, a successor list containing link information related to said moderator template;
(c) generating, by means of said moderator template, a predecessor list containing link information related to said first activity and a successor list containing link information related to said second activity; and
(d) generating, during said second activity, a predecessor list containing link information related to said moderator template.
11. An apparatus for generating a mobile object group, said group including a first activity to be executed at a first place, a second activity to be executed at a second place, and a moderator template for requiring a moderator agent to move to said second place, said moderator agent being operable to control the movement of said mobile group at said first place, said apparatus comprising:
(a) means for generating, during said first activity, a successor list containing link information related to said moderator template;
(b) means for generating, by means of said moderator template, a predecessor list containing link information related to said first activity and a successor list containing link information related to said second activity; and
(c) means for generating, during said second activity, a predecessor list containing link information related to said moderator template.
12. A computer-readable memory medium storing a program for generating a mobile object group, said group including a first activity to be executed at a first place, a second activity to be executed at a second place, and a moderator template for requiring a moderator agent to move to said second place, said moderator agent being operable to control the movement of said mobile group at said first place, said program comprising:
(a) program code for instructing said computer to generate, during said first activity, a successor list containing link information related to said moderator template;
(b) program code for instructing said computer to generate, by means of said moderator template, a predecessor list containing link information related to said first activity and a successor list containing link information related to said second activity; and
(c) program code for instructing said computer to generate, during said second activity, a predecessor list containing link information related to said moderator template.
